(19) Europäisches Patentamt
European Patent Office
Office européen des brevets

(11) EP 0 725 102 A1

(12) DEMANDE DE BREVET EUROPEEN

(43) Date de publication:
07.08.1996 Bulletin 1996/32

(51) Int Cl.[6]: C08G 77/08, C08K 5/098, C08K 5/00

(21) Numéro de dépôt: 96420019.0

(22) Date de dépôt: 15.01.1996

(84) Etats contractants désignés:
AT BE CH DE DK ES FR GB GR IE IT LI LU NL PT SE

(30) Priorité: 16.01.1995 FR 9500610

(71) Demandeur: RHONE-POULENC CHIMIE
92408 Courbevoie Cédex (FR)

(72) Inventeurs:
- Frances, Jean-Marc
F-69330 Meyzieu (FR)
- Giraud, Yves
F-69110 Sainte-Foy-Les-Lyon (FR)

(74) Mandataire: Fleurance, Raphael
Cabinet Beau de Loménie,
51, Avenue Jean Jaurès,
B.P. 7073
69301 Lyon Cédex 07 (FR)

# (54) Procédé de condensation de motifs silyles à l'aide d'un catalyseur organométallique, catalyseur et silicones obtenues

(57) La présente invention concerne la préparation de compositions siloxaniques fonctionnalisées et/ou réticulables et des matériaux réticulés en résultant. Plus précisément, l'invention concerne les procédés de condensation chimique faisant intervenir des motifs silyles de type SiOH et des motifs de type SiR, avec R = H ou OR*, R* correspondant à l'hydrogène ou à un radical hydrocarboné monovalent e.g. en $C_1$-$C_{12}$.

Plus précisément encore, l'invention a trait aux catalyseurs organométalliques mis en oeuvre dans ces condensations.

Les buts visés sont notamment l'économie, le caractère non agressif du catalyseur vis-à-vis des produits de la réaction et enfin un haut niveau de performances catalytiques.

Ces buts et d'autres sont atteints par le procédé de l'invention selon lequel on a recours à des carboxylates de métaux alcalins particuliers e.g. : carboxylates quaternaires et/ou au moins doublement tertiaires de lithium.

Application : compositions silicones réticulables susceptibles de former des revêtements pour e.g. l'antiadhésion des liants ou des mastics.

EP 0 725 102 A1

## Description

Le domaine de la présente invention est celui de la préparation de compositions siloxaniques fonctionnalisées et/ou réticulables et des matériaux réticulés en résultant. Plus précisément, l'invention concerne les procédés de condensation chimique faisant intervenir des motifs silyles de type SiOH et des motifs de type SiR, avec R = H ou OR*, R* correspondant à l'hydrogène ou à un radical hydrocarboné monovalent e.g. en $C_1$-$C_{12}$. Ce type de réaction est au coeur des phénomènes de réticulation/durcissement entre des composés comprenant les motifs silyles susmentionnés. Plus précisément encore, ces composés sont des polyorganosiloxanes se présentant sous forme d'élastomère ou de résine. Ce genre de réticulation/durcissement s'effectue en présence d'eau et éventuellement à l'aide de moyens d'activation chimique et/ou physique (thermo et/ou photoactivation). La condensation ici envisagée n'est pas exclusive d'autres mécanismes de réticulation, par exemple, par hydrosilylation ou ouverture de cycle époxy.

La présente invention a trait, plus spécialement, aux catalyseurs organométalliques mis en oeuvre dans les mécanismes de condensation sus-évoqués.

Elle s'intéresse également aux compositions silicones fonctionnalisées par greffage de radicaux fonctionnels selon un mécanisme de condensation et/ou réticulables, (mono ou bicomposant) cette réticulation faisant aussi intervenir la condensation SiOH/SiR et les catalyseurs sus-évoqués. L'invention vise également leurs applications en tant que revêtement antiadhérent ou d'enduction textile, ou bien encore comme liant de matériau composite fibreux ou non, voire comme constituant d'adhésif.

Classiquement, les procédés de condensation dans le domaine des silicones peuvent faire intervenir, d'une part, des polydiorganosiloxanes $\alpha,\omega$-dihydroxylés et, d'autre part, des composés siliciés du type di-, tri- ou tétraalcoxysilanes. La littérature technique antérieure regorge d'exemples de catalyseurs de fonctionnalisation utilisés dans ce type de réaction de condensation. On peut mentionner de façon non limitative : les amines, les oxydes inorganiques, les dérivés organiques de titane, les combinaisons titane/amine, les hydroxylamines, les chélates d'aluminium, les carbamates, et les oximes.

Tous ces catalyseurs connus souffrent d'inconvénients rédhibitoires.

En particulier, les amines induisent de faibles cinétiques réactionnelles, même avec des alcoxysilanes très réactifs comme $ViSi(OCH_3)_3$. De plus les amines ont une odeur désagréable et sont toxiques. Elles polluent le milieu réactionnel et déstabilisent les produits finis.

Les catalyseurs à base de titane et de groupements hydrocarbonés, tels que le tétraisopropoxytitane, ont pour effet néfaste d'entraîner une gélification du milieu, particulièrement gênante à un stade industriel.

On connaît également les catalyseurs de fonctionnalisation du type acétate de potassium (US **N° 3 504 051**) ou de sodium (US **N° 3 563 241**); de même que des mélanges acide carboxylique amine, comme enseigné par le FR **N° 2 604 713**. De tels catalyseurs souffrent d'être relativement corrosifs et donc délicats à manipuler. En outre, ils ne permettent pas d'améliorer de manière significative les cinétiques de réticulation.

Le brevet US **N° 5 026 811** décrit la réticulation de résines silicones du type polyméthylphénylsiloxane par mise en oeuvre d'un catalyseur organométallique constitué par un mélange de carboxylates de métal alcalin, d'un carbonate ou d'un bicabornate de métal alcalin, et éventuellement d'un carboxylate d'ammonium. Le métal alcalin sélectionné peut être, par exemple, le lithium et les carboxylates, des acétates ou des 2-éthylhexanoates (Col 3 1. 40 - 45). Ces mélanges catalytiques présentent l'inconvénient de ne pas être directement solubles en milieu silicone et de donner lieu à des résidus difficiles à éliminer.

Plus récemment, il a été proposé des catalyseurs de fonctionnalisation (condensation SiOH/SiOR*), formés par des hydroxydes de métaux alcalins tels que le sodium, le potassium (EP **N° 457 693** et US **N° 5 196 497**) ou bien encore de lithium (US **N° 5 079 324**). Cette nouvelle classe de catalyseurs vise à remplacer les carboxylates, qui apparaissent à l'homme du métier comme étant inappropriés, non performants et défectueux, lorsqu'ils sont employés seuls dans cette application. Malheureusement, ces catalyseurs du type alcali pèchent par leur caractère agressif, qui s'exprime surtout à des températures élevées, par exemple de l'ordre de 100 °C. En effet, la forte alcalinité qu'ils génèrent est à l'origine de dégradation sur les réactifs et les produits de la réaction de condensation. Cette basicité complique, en outre, la manipulation du milieu réactionnel. Par ailleurs, ces hydroxydes inorganiques, insolubles dans les silicones, requièrent l'utilisation de solvants polaires qui induisent l'apparition des formes régénérées du métal alcalin concerné. Ces dernières seraient à l'origine d'un phénomène de lyse du polymère et/ou réticulat obtenu (reversion).

C'est ainsi que pour améliorer la catalyse de ce type de réaction de condensation, la demande de brevet européen **N° 0 564 253** enseigne la mise en oeuvre d'un catalyseur constitué par un composé organométallique à base de lithium et ne nécessitant pas l'emploi de solvant polaire ou aprotique. Plus précisément, les catalyseurs divulgués sont des silanolates de lithium ou des alkyles lithium tels que le t ou n-butyllithium. Il s'avère que ces catalyseurs connus sont toujours de nature à entraîner, à chaud, des dégradations des réactifs et des produits. Cet enseignement s'inscrit dans le prolongement de la tendance générale de perfectionnement de la catalyse des réactions SiOH/SiOR en abandonnant la voie carboxylate. Force est de constater que les améliorations obtenues restent insatisfaisantes, quant à la stabilité

voire à la cinétique obtenues.

Dans ces circonstances, l'un des objectifs essentiels de la présente invention est de fournir un procédé de condensation SiOH / SiR entre des composés siliciés comportant de tels motifs silyles, lequel procédé se devant de mettre en oeuvre des catalyseurs du genre organométallique, remédiant aux inconvénients des catalyseurs de fonctionnalisation de l'art antérieur, évoqués supra.

Un autre objectif de l'invention est de fournir un procédé de condensation dans lequel le catalyseur organométallique utilisé ne soit pas corrosif, ni agressif vis-à-vis des réactifs et des produits, qui soit économique et qui, enfin, soit performant sur le plan des cinétiques réactionnelles atteintes.

Un autre objectif de l'invention est de fournir un procédé de condensation faisant intervenir un catalyseur organométallique, directement et aisément soluble en milieu silicone.

Un autre objectif essentiel de l'invention est de fournir des catalyseurs ayant les spécifications sus-évoquées.

Un autre objectif essentiel de l'invention est de fournir des compositions silicones réticulables en présence d'eau, et qui permettent d'obtenir des élastomères ou des résines, de manière économique, rapide et simple.

Un autre objectif de l'invention est de fournir des compositions fonctionnalisées par greffage de radicaux fonctionnels selon un mécanisme de condensation.

Un autre objectif essentiel de l'invention est de fournir des compositions silicones réticulables en présence d'eau et permettant d'atteindre des taux de réticulation relativement hauts et donc des duretés importantes.

Un autre objectif de l'invention est de fournir des systèmes formés de compositions silicones susceptibles de réticuler en présence d'eau, comprenant au moins deux composants, faciles à manipuler et doués de propriétés de stabilité au stockage.

Un autre objectif essentiel de l'invention est de fournir des applications des compositions sus-mentionnées comprenant le catalyseur de condensation visé ci-dessus, en tant qu'élément constitutif de mastic, de revêtement anti-adhérent, d'adhésif ou bien encore de liant de matériau composite fibreux ou non.

Ces objectifs et d'autres sont atteints par la présente invention qui concerne, tout d'abord, un procédé de condensation entre au moins un motif (SiOH) et au moins un motif (SiR) avec R = H ou OR*, avec R* = hydrogène ou radical hydrocarboné monovalent ayant de 1 à 12 atomes de carbone, lesdits motifs SiOH/SiR appartenant à au moins un composé (organo)silicié en présence d'une quantité efficace d'un catalyseur organométallique,

caractérisé en ce que l'on sélectionne le catalyseur parmi les produits de formule suivante :

$$- \mathit{1} - (R^1\ COO)_v M$$

dans laquelle M = métal alcalin ou alcalino-terreux, v = valence de M et $R^1$ est un radical hydrocarboné, avec la condition selon laquelle ce radical hydrocarboné possède au moins un carbone quaternaire et/ou au moins deux carbones tertiaires et comprend, de préférence, au moins trois atomes de carbone, cette condition s'appliquant dans le cas où le (ou les) composé(s) organosilicié(s) mis en oeuvre n'est (ne sont) pas aminé(s) et/ou salifié(s),

- ou leurs mélanges.

Il est du mérite de la Demanderesse d'avoir mis en évidence, de manière tout à fait surprenante et inattendue et après de nombreuses études et expériences, que la sélection de catalyseurs particulièrement appropriés pour les réactions de condensation SiOH / SiOR*, doit avantageusement être effectuée dans deux familles de produits selon la nature des composés organosiliciés de départ.

Ainsi, dans le cas N° 1 où la susdite condition s'applique, i.e. où les composés organosiliciés de départ ne sont pas aminés et/ou salifiés, la sélection s'opère parmi les carboxylates dont le radical hydrocarboné $R^1$ correspond à $R^\alpha$, lequel représente un reste alkyle comprenant au moins un carbone relié à quatre autres carbones et/ou au moins deux carbones relié chacun à trois autres carbones.

Dans le cas N° 2 où la susdite condition ne s'applique pas, i.e. où les composés organosiliciés de départ sont aminés et/ou salifiés, le catalyseur est formé par un carboxylate - *1* - $(R^1COO)_vM$ de toute nature, avec $R^1$ correspondant à $R^\beta$, lequel représente un radical hydrocarboné, de préférence alkyle linéaire ou ramifié, cyclo-alkyle en $C_1$-$C_{20}$, éventuellement substitué, par exemple par des halogènes, et éventuellement insaturé,

ou bien encore aryle, aralkyle aralkylaryle.

Les résultats obtenus en matière de cinétique de réticulation de solubilité directe en milieu silicone, d'absence de caractère agressif (permettant notamment de s'affranchir d'agent neutralisant), corrosif et nauséabond et de compatibilité (miscibilité avec les réactifs et les produits mis en oeuvre), étaient d'autant moins prévisibles que les sous-groupes chimiques envisagés et, en particulier, les carboxylates avaient déjà été étudiés et mis à l'index par les techniciens du domaine considéré.

Pour parfaire les performances catalytiques des carboxylates organométalliques de l'invention, il est apparu avantageux de les associer à au moins un cocatalyseur choisi parmi les produits de formules suivantes :

- *2* - $R^{1*}$ COOH

avec $R^1$ * correspondant à un groupement $R^1$ tel que défini supra,

- *3* - $(R^2O)_vM$,

-*4*-$(R^2COCR^3R^4COR^5)_vM$

M et v étant tels que définis supra

et $R^2$, $R^3$, $R^4$, $R^5$ sont identiques ou différents et représentent l'hydrogène, un alkyle linéaire ou branché et/ou cyclique en $C_1$-$C_{12}$ éventuellement insaturé, un aryle, un aralkyle, un arylalkyle, un organosilicié (de préférence du type silanolate ou siloxanate), lesdits radicaux hydrocarbonés étant éventuellement substitués et avantageusement (per)halogénés,

- *5* -

ou leurs mélanges.

Cette association de carboxylates quaternaires et/ou au moins doublement tertiaires de M avec des cocatalyseurs du type :

- carboxylates - *1* - linéaires ou ramifiés avec des carbones primaires, et/ou secondaires et/ou tertiaires et/ou quaternaires,
- acides carboxyliques - *2* - dont les restes hydrocarbonés sont identiques ou différents à $R^1$,
- alcoolates - *3* -, dont notamment silanolates ou siloxanates,
- ou βdicétonates - *4* -,

permet une amélioration sensible des cinétiques de condensation. Cela facilite la préparation du catalyseur puisque l'on peut travailler en excès d'acide carboxylique, sachant qu'il n'est pas nécessaire, mais au contraire recommandé de ne pas éliminer cet excès.

Parmi les restes hydrocarbonés $\mathbf{R^1 = R^\alpha}$ à carbone quaternaire et/ou au moins doublement tertiaire préférés, selon le cas N° 1 qui correspond à des composés organosiliciés de départ non salifiés et/ou aminés, on peut citer les dialkyl-a,a- ou les trialkyl-a,a,a ou a,a,b-carboxylates, les substituants alkyles étant en $C_1$-$C_6$, de préférence Me, Et, et les carboxylates en $C_2$-$C_{15}$ de préférence décanoate ou l'hexanoate.

Conformément à une modalité préférée de l'invention, le métal M des formules - *1* -, - *3* - et - *4*- appartient au groupe suivant : Li, Na, K, le Li étant préféré.

Dans le cas N° 1, les catalyseurs à base de néodécanoate de Lithium et/ou de triméthyl,3,5,5-hexanoate de lithium sont particulièrement préférés.

Certains des acides carboxyliques utilisables pour la synthèse des catalyseurs - *1* - selon l'invention se présentent sous la forme de mélanges de différentes coupes d'acide. On peut citer, à titre d'exemples pour le cas N° 1, les coupes d'acides néodécanoïques commercialisés par la Société SHELL sous l'appelation "acide versatique" ou bien encore l'acide triméthyl-3,5,5-hexanoïque commercialisée par la Société EXXON sous la dénomination "acide cékanoïque".

Les carboxylates auxquels on s'intéresse dans le cadre de l'invention, sont obtenus à partir des esters des acides carboxyliques correspondants. (e.g. : acétate de lithium. Encyclopedy of Chemical Technology - Vol. 14 p 459).

Un exemple d'un tel catalyseur est le produit à base de lithium commercialisé par RHONE POULENC Chem sous l'appellation Manosec lithium 2%, à base de carboxylate de lithium, qui est un cocatalyseur des peintures siccatives en présence de cobalt.

S'agissant des cocatalyseurs du type alcoolates - *3* - métalliques préférés, on peut mentionner e.g. : $Me_3$ SiOLi ou MeOLi. La préparation de ces alcoolates fait intervenir les alcools correspondants à titre de produits de départ. On les fait réagir avec des acides et on élimine au besoin l'excès d'alcool et/ou les dicétones ou les βcétoesters formés.

Les β-dicétonates - *4* - privilégiés conformément à l'invention sont, par exemple l'acétylacétonate, l'acétoacétate d'alkyle $C_1$-$C_6$ (éthyl de préférence).

Ces β-dicétonates sont obtenus à partir des esters d'acides correspondants, que l'on met à réagir avec une cétone, en présence d'un auxiliaire réactionnel. Lorsqu'il s'agit, par exemple, d'un ester carboxylique méthylique, on met en oeuvre de l'acétophénone et du méthylate de sodium.

Avantageusement, les catalyseurs, et éventuellement les cocatalyseurs, mis en oeuvre dans le procédé selon l'invention se présentent sous forme de solutions dans des solvants organiques tels que le White Spirit.

Suivant le procédé de l'invention, les composés siliciés impliqués dans le mécanisme de condensation considérée, sont de préférence des polyorganosiloxanes (POS).

En particulier, le composé silicié est avantageusement, un polyorganosiloxane **A** (POS) dont au moins une des extrémités silicium comprend au moins un hydroxyle ou un radical hydrolysable ou condensable,

ledit POS répondant de préférence à la formule suivante :

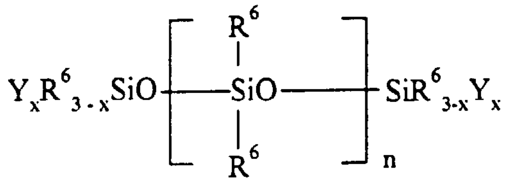 $(A_1)$

avec

- x=o,1,2 ou 3
- n entier supérieur ou égal à 1 de préférence à 10,
- les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

les radicaux méthyle, éthyle, propyle, butyle étant plus particulièrement sélectionnés,

- Y représentant des groupes identiques ou différents et hydrolysables ou condensables ou bien encore hydroxyles ;
- au moins une partie des radicaux $R^6$ pouvant éventuellement correspondre à Y.

La viscosité de huiles de formule **$A_1$** est comprise entre 50 et $10^6$ mPa.s à 25° C. Comme exemple de radicaux $R^6$ on peut citer les radicaux alkyle ayant de 1 à 8 atomes de carbone tels que méthyle, éthyle, propyle, butyle, héxyle et octyle, les radicaux vinyle, les radicaux phényle. Comme exemples de radicaux $R^6$ substitués, on peut citer les radicaux trifluoro-3,3,3 propyle, chlorophényle et β-cyanoéthyle.

Dans les produits de formule **$A_1$** généralement utilisés industriellement, au moins 60 % en nombre des radicaux $R^6$ sont des radicaux méthyle, les autres radicaux étant généralement des radicaux phényle et/ou vinyle.

Comme exemples de groupes Y hydrolysables, on peut citer les groupes amino. acylamino, aminoxy, cétiminoxy, iminoxy, alcoxy, alcoxy-alkylène-oxy et phosphato.

Comme exemples de groupes Y amino, on peut citer les groupes n-butylamino, sec-butylamino et cyclohexylamino, de groupes acylamino N substitué. On peut citer le groupe benzol-amino, de groupes aminoxy les groupes diméthylaminoxy, diéthylaminoxy, dioctylaminoxy et diphénylaminoxy, comme exemples de groupes Y iminoxy et cétiminoxy, ceux dérivés de l'acétophénone-oxime, l'acétone-oxime, la benzophènone-oxime, la méthyléthyl cétoxime, la diisopropylcétoxime et la chlorocyclo-hexanone-oxime.

Comme groupes Y alcoxy on peut citer les groupes ayant de 1 à 8 atomes de carbone comme les groupes méthoxy, éthoxy, propoxy, isopropoxy, butoxy, hexyloxy et octyloxy, comme groupe Y alcoxy-alkylène-oxy on peut citer le groupe méthoxy-éthylène-oxy.

Comme groupes Y phosphato, on peut citer ceux dérivant des groupes phosphate de diméthyle, phosphate de diéthyle et phosphate de dibutyle.

Comme groupes Y condensables, on peut citer les atomes d'hydrogène.

Selon une caractéristique intéressante de l'invention, $R^6$ peut comprendre au moins une fonction réactive de polymérisation et/ou réticulation, avantageusement constituée par une unité insaturée, de préférence éthyléniquement insaturée (e.g. vinylique, (méth)acrylique), ou époxydée (e.g. : β-3,4-époxycyclohexyléthyle ou le glycidoxypropyle). La réactivité aussi apportée, peut donner naissance à une fonctionnalisation ou réticulation autre que celle par condensation et qui peut, par exemple, être photo et/ou thermoactivée, en présence ou non d'amorceurs de réticulation.

A titre d'exemples de tels POS, on peut mentionner les organopolyorganosiloxanes α-ω-dihydroxylés de formule **$A_1$**. Ce sont généralement des huiles dont la viscosité à 25 °C varie de 500 mPa.s à 500 000 mPa.s, de préférence 800 mPa.s à 400 000 mPa.s. Ce sont des polymères linéaires constitués essentiellement de motifs diorganosiloxyles de formule : $-(R^6)_2\ SiO_2/_2$. Toutefois, la présence d'autres motifs présents généralement à titre d'impuretés tels que $R^6SiO_3/_2$, $(R^6)_3\ SiO_{1/2}$ et $SiO_4/_2$ n'est pas exclue dans la proportion d'au plus 1% par rapport au nombre de motifs diorganosiloxyles.

En pratique, les radicaux organiques liés aux atomes de silicium des huiles de base est représenté par les symboles $R^6$, peuvent être avantageusement choisis parmi les radicaux alkyles ayant de 1 à 3 atomes de carbone tels que les radicaux méthyle, éthyle, n-propyle, le radical vinyle, le radical phényle, le radical trifluoro-3,3,3-propyle et le radical β cyanoéthyle. De préférence, au moins 60 % de l'ensemble des radicaux $R^6$ sont des radicaux méthyles, au plus 1 % sont des radicaux vinyles.

A titre illustratif de motif représenté par la formule $(R^6)_2\ SiO_{2/2}$, on peut citer ceux de formule : $(CH_3)_2\ Si(O_{2/2})$ ; $CH_3\ Si(CH_2{=}CH)(O_{2/2})$ ; $CH_3\ Si(C_6H_5)(O_{2/2})$, $CF_3$-$(CH_2)$-$_2\ SiCH_3(O_{2/2})$ ; NC-$(CH_2)$-$_2$ Si-$CH_3\ (O_{2/2})$.

Ces huiles de base sont dans leur grande majorité commercialisées par les fabricants de silicone. Par ailleurs, leurs techniques de fabrication sont bien connues, on les trouve par exemple décrites dans les brevets français **FR-A-1 134 005, FR-A-1 198 749, FR-A-1 226 745.**

En plus des POS linéaires de type $\mathbf{A_1}$ décrits ci-dessus, l'invention vise également des POS de structure cyclique comprenant de 3 à 15 motifs siloxaniques de préférence, de 3 à 6, l'un au moins desdits motifs étant porteurs d'au moins une fonctionnalité Y.

Selon une alternative de $\mathbf{A_1}$, le composé silicié **A** peut être constitué par un polymère $\mathbf{A_2}$ formé par un squelette linéaire ou cyclique hydrocarboné comprenant au moins un motif silyle ou siloxyle $(O)SiR^6_{3-x}\,Y_x$, ledit motif étant tel que défini supra et étant porteur d'au moins un radical Y. Dans le cas où $\mathbf{A_2}$ est linéaire, il comprend avantageusement un tel motif silyle ou siloxyle à au moins l'une de ses extrémités, de préférence aux deux. Le squelette hydrocarboné linéaire peut, par exemple, être un (co)polymère, de préférence, du type polyuréthanne, polyamide, polyéther...

Conformément à l'invention, il est envisageable que les huiles $\mathbf{A_1}$ ou $\mathbf{A_2}$ réagissent entre elles par condensation SiOH/SiY après hydrolyse de radicaux $Y \neq OH$, et éventuellement en présence de $Y = OH$.

Mais, il faut également considérer le cas où l'on fait intervenir dans la condensation, un réactif de nature différente de **A** constitué par un silane **B**.

Ce composé **B** se comporte comme un agent réticulant et/ou comme un agent de fonctionnalisation des composés **A**.

Dans le cas où les Y correspondent essentiellement à des OH, ce silane B est particulièrement recommandé, voire même nécessaire pour qu'une condensation se produise.

Ces silanes **B** répondent à la formule générale suivante :

$$(B) \qquad R^7_{4-a}\,Si\,Y'_a$$

dans laquelle :

- $R^7$ a la même signification que celle de $R^6$ donnée plus haut à la formule $\mathbf{A_1}$
- Y'représente des groupes hydrolysables ou condensables, identiques ou différents,
- et a est égal à 3 ou 4.

Les exemples donnés pour les groupes Y sont applicables aux groupes Y'.

Il est souhaitable d'utiliser des silanes de formule **B** même dans le cas où dans l'huile $\mathbf{A_1}$ ou $\mathbf{A_2}$, Y n'est pas un groupe hydroxy.

Dans ce cas, il est souhaitable d'utiliser des groupes Y de l'huile $A_1$ ou $A_2$ identiques aux Y' du silane **B**.

Comme exemples de silanes **B**, on peut citer plus particulièrement les polyacyloxysilanes, les polyalcoxysilanes, les polycétiminoxysilanes et les polyiminoxysilanes et en particulier les silanes suivants :

$CH_3\,Si\,[ON = C\,(CH_2)(C_2H_5)]_3$ ; $CH_2 = CH\text{-}Si[ON = C(CH_3)(C_2H_5)]_3$ : $CH_3\,Si(ON = CH\text{-}CH_3)_2$
$OCH_2CH_2OCH_3$ ; $Si(OCH_3)_4$
$Si(OCH_2CH_3)_4$
$Si(OCH_2CH_2CH_3)_4$
$(CH_3O)_3\,SiCH_3$
$(C_2H_5O)_3\,SiCH_3$
$(CH_3O)_3\,SiCH{=}CH_2$
$(C_2H_5O)_3\,SiCH{=}CH_2$
$(CH_3O)_3\,SiCH_2\text{-}CH{=}CH_2$
$(CH_3O)_3\,Si[CH_2\text{-}(CH_3)C{=}CH_2]$
$(C_2H_5O)_3\,Si(OCH_3)$
$Si(OCH_2\text{-}CH_2\text{-}OCH_3)_4$
$CH_3Si(OCH_2\text{-}CH_2\text{-}OCH_3)_3$
$CH_2{=}CHSi(OCH_2CH_2OCH_3)_3$
$C_6H_5Si(OCH_3)_3$
$C_6H_5Si(OCH_2\text{-}CH_2\text{-}OCH_3)_3$

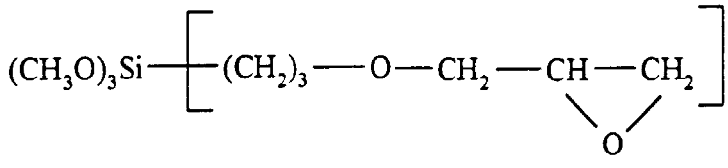

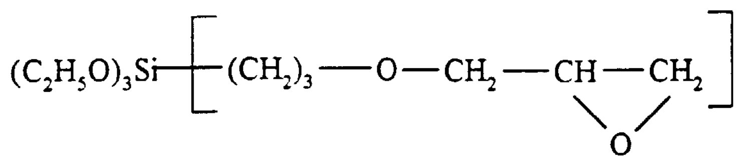

$H-Si(OCH_3)_3$ et $HSi\ (OC_2H_5)_3$
$(CH_3O)_3Si-[-(CH_2-)_2CH_2-Cl]$
$(CH_3O)_3Si-[-(CH_2-)_3OOC-(CH_3-)C=CH_2]$

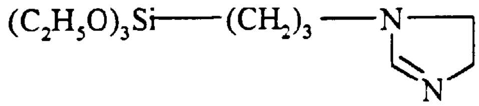

$(C_2H_5O)_3\ Si-(CH_2-)_2CH_3Cl$
$(CH_3O)_3\ Si-(CH_2)_3-NH_2$
$(C_2H_5O)_3\ Si-(CH_2)_3-s1H_2$
$(CH_3O)_3\ Si-(CH_2)_3-NH-(CH_2)_2-NH_2$
$(C_2H_5O)_3\ Si-(CH_2)_3-NH-(CH_2)_2-NH_2$
$(CH_3O)_3\ Si(CH_2)_3-SH$
$(CH_3)(CH_2=CH)Si(OCH_3)_2$

et leurs mélanges.

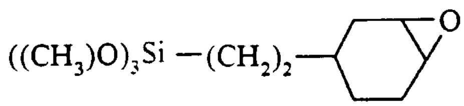

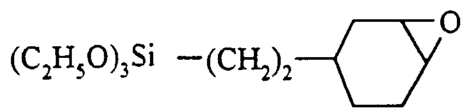

## Silane B

Les silanes plus particulièrement préférés sont les suivants :

$Si(OC_2H_5)_4$, $CH_3Si(OCH_3)_3$, $CH_3Si(OC_2H_5)_3$,
$(C_2H_5O)_3\ Si(OCH_3)$, $CH_2=CH-Si(OCH_3)_3$,
$CH_3(CH_2=CH)Si(OCH_3)_2$, $CH_2=CH-Si(OC_2H_5)_3$ et leurs mélanges.

Les agents réticulants **B**, qu'ils soient utilisables pour la préparation des systèmes monocomposants ou bi-composants, sont des produits accessibles sur le marché des silicones. De plus leur emploi dans les compositions durcissant dès la température ambiante est connu. Ils figurent notamment dans les brevets français **FR-A-1 126 411 ; FR-A-1 179 969, FR,A-1 189 216, FR-A-1 198 749, FR-A-1 248 826, FR-A-1 314 649, FR-A-1423 477, FR-A-1 432 799** et **FR-A-2 067 636**.

A tout ou partie des silanes **B** ci-dessus décrits, on peut substituer des polyalcoxypolysiloxanes **B'** dont chaque molécule compte au moins deux, de préférence trois atomes Y', les autres valences du silicium sont satisfaites par des liaisons siloxaniques Si-O- et SiR. Comme exemples d'agents réticulants polymères **B'** on peut citer les silicates d'alkyle.

Ces produits peuvent être choisis parmi le silicate de méthyle, le silicate d'éthyle, le silicate d'isopropyle, le silicate de n-propyle, et les polysilicates choisis parmi les produits d'hydrolyse partielle de ces silicates ; ce sont des polymères constitués d'une proportion importante de motifs de formule $(R^8O)_3\ SiO_{0,5}$ ; $R^8OSiO_{1,5}$ $(R^8O)_2$ SiO et $SiO_2$, le symbole $\mathbf{R^8}$ représentant les radicaux méthyle, éthyle, isopropyle, n-propyle. Pour les caractériser on se base habituellement sur leur teneur en silice qui est établie par dosage du produit d'hydrolyse totale d'un échantillon. On peut en particulier utiliser comme polysilicate, un silicate d'éthyle partiellement hydrolysé commercialisé sous la marque "Ethyl Silicate-$40^{\mathbf{R}}$ par Union Carbide Corporation, ou un silicate de propyle partiellement hydrolysé.

Selon une variante avantageuse de l'invention, on met en oeuvre un mélange de deux ou plusieurs silanes **B** et/ou de polyalcoxypolysiloxanes **B'** tels que définis supra.

Dans cette variante, il est particulièrement intéressant d'utiliser deux composés différents **B** et/ou **B'** et plus particulièrement encore, un composé **B** et un composé **B'**.

Cela peut être par exemple du silicate d'éthyle **(B')** et du vinyltriméthoxysilane ou du méthyltriméthoxysilane **(B)**.

Suivant un autre de ses aspects, l'invention concerne la fonctionnalisation de POS **A** par condensation avec des silanes **B** ou **B'**, et à l'aide de catalyseurs particuliers.

C'est ainsi qu'elle vise également un procédé de condensation entre :

→ au moins un polyorganosiloxane **A** (POS) dont au moins une des extrémités silicium comprend au moins un hydroxyle ou un radical hydrolysable ou condensable, ledit POS répondant de préférence à la Formule **($A_1$)** suivante :

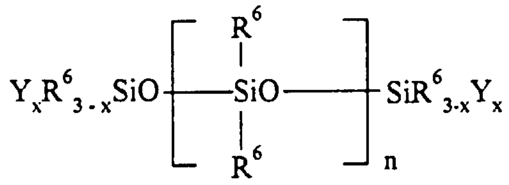

($A_1$)

avec

- ♦ x = 0, 1, 2 ou 3
- ♦ n entier supérieur ou égal à 1 de préférence à 10,
- ♦ les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

  les radicaux méthyle, éthyle, propyle, butyle étant plus particulièrement sélectionnés,

- ♦ Y représentant des groupes identiques ou différents et hydrolysables ou condensables ou bien encore hydroxyles ;
- ♦ au moins une partie des radicaux $R^6$ pouvant éventuellement correspondre à Y,

→ et au moins un silane **B** de formule générale :

$$\textbf{(B)} \qquad R^7{}_{4-a}\,Si\,Y'_a$$

dans laquelle :

- $R^7$ a les significations données plus haut à la formule **$A_1$**
- Y' représente des groupes hydrolysables ou condensables, identiques ou différents,
- et a est égal à 3 ou 4 ;

→ en présence d'une quantité efficace d'un catalyseur organométallique,
caractérisé

- en ce que l'on sélectionne le polyorganosiloxane **A** parmi ceux dans lesquels le ratio molaire $R^6$ / Si est supérieur ou égal à 2,
- et en ce que le catalyseur est constitué par au moins un produit de formule $R^\gamma COOLi$, dans laquelle $R^\gamma$ répond à la même définition que celle donnée supra pour $R^\alpha$ et $R^\beta$ ; $R^\gamma$ étant, de préférence, un alkyle en $C_1$-$C_{30}$, avantageusement en $C_1$ - $C_{18}$, linéaire ou ramifié ($R^\gamma$ n'étant pas limité à $R^\alpha$ dans ce dernier cas), un aryle, un aralkyle ou un alkylaryle, le méthyle et l'éthyl-2-pentyle étant particulièrement préférés.

Suivant le procédé de l'invention, on utilise généralement de 0,1 à 20 parties en poids d'agent réticulant de formule **B** et 0,001 à 10, de préférence 0,05 à 3 parties en poids de catalyseur de condensation pour 100 parties en poids de polymère de formule **$A_1$** ou **$A_2$**.

Conformément à l'invention, il est possible de mettre en oeuvre, en complément et/ou à la place des composés **A**, des produits **(C)** à base de résine de type polyorgano(alcoxy)siloxane répondant à la formule générale ci-après :

$$(C) \qquad [R^9{}_3SiO_{\frac{1-t0}{2}}(OR^{12})_{t0}]_q\ [R^{10}{}_2SiO_{\frac{2-t1}{2}}(OR^{12})_{t1}]_u\ [R^{11}SiO_{\frac{3-t2}{2}}(OR^{12})_{t2}]_y$$

$$[ZR^{10}Si_{\frac{2-t3}{2}}(OR^{12})_{t3}]_{z'}[ZSiO_{\frac{3-t4}{2}}(OR^{12})_{t4}]_{z''}\ [SiO_{\frac{4-t4}{2}}(OR^{12})_{t5}]_{w}$$

dans laquelle :

- $q+u+y+z'+z''+w=1$
- $0 \leq q < 1$ ; $0 \leq u < 1$ ; $0 \leq y < 1$ ; $0 \leq z' \leq 1$ ; $0 \leq z'' < 1$ ; $0 \leq W < 1$
- $t_0 \leq 1$ ; $t_1 \leq 2$ ; $t_3 \leq 2$ ; $t_4 \leq 3$ ; $t_5 \leq 4$.
- $R^9$, $R^{10}$ et $R^{11}$ sont identiques ou différents et représentent des radicaux
  - . (cyclo)alkyle,(cyclo)alcényle, (cyclo)alcynyle,
  - . aryle, avantageusement phényle, aralkyle, alkylaryle,

  lesdits radicaux étant éventuellement substitués, de préférence, halogénés et éventuellement perhalogénés;
- $R^{12}$ a la même définition que $R^9$, $R^{10}$, $R^{11}$ 1 telle qu'énoncée ci-dessus et peut correspondre en outre à des groupements hydrocarbonés en $C_1$-$C_{20}$ comprenant éventuellement un ou plusieurs hétéroatomes, et en particulier comportant des motifs oxime, énoxy éther ou polyéther,
- Z est identique ou différent d'une unité récurrente DZ ou TZ à l'autre et représente un groupement monovalent hydrocarboné, lié au silicium par une liaison Si-C et contenant au moins un atome d'azote, de préférence Z répond à la formule suivante :

$$-R^{13}-N(R^{14})_2$$

dans laquelle :

- $R^{13}$ est un groupement alkylène divalent en $C_1$-$C_{10}$, éventuellement substitué,
- les groupements $R^{14}$ sont identiques ou différents et

  * soit représentent l'hydrogène ou $-R^{15}-NH_2$ avec $R^{15}$ ayant la même signification que $R^{13}$,
  * soit sont différents de l'hydrogène et forment ensemble un cycle de 5-7 chainons renfermant au moins un hétéroatome, de préférence l'azote ou l'oxygène.

De manière privilégiée, le radical Z ne comprend pas de groupements $R^{14}$ cyclisés, mais correspond plutôt à :

__(alkylène__NH__)$_s$ alkylène $NH_2$ avec s = 0 à 3.

Selon une variante cyclisée Z représente avantageusement :

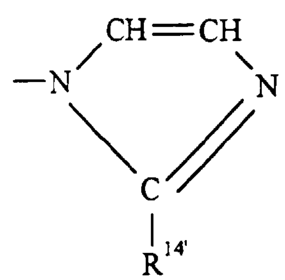

ou

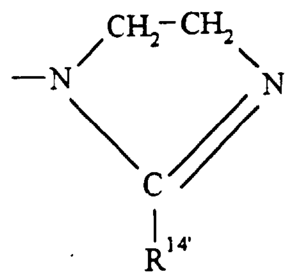

avec $R^{14'}$ = H ou alkyle, de préférence en $C_1$-$C_{10}$.

Il est à noter que la cyclisation des 2 radicaux $R^{14}$ en hétérocycle est un phénomène qui peut intervenir au sein

de la résine C avant ou après condensation.

En outre, il va de soi que la dispersion n'est pas limitée à un seul type de substitut aminé Z pour la résine C. En effet, il est parfaitement envisageable de prévoir des radicaux Z de différentes natures.

Selon une modalité intéressante de l'invention, la résine siliciée et aminée **(C)**, est salifiée et comprend un ou des radicaux Z de formule suivante :

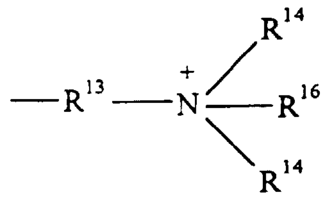

, $\bar{X}$

avec $R^{13}$ et $R^{14}$ tels que définis supra, $R^{16}$ ayant la même signification que $R^{14}$

et X représentant un contre-anion choisi parmi les carboxylates, les halogénures, les sulfonates, de préférence parmi les produits suivants : lactate, acétate, chlorure.

A titre d'exemples de Z salifié, on peut citer :

$$-(\text{alkylène}-\overset{\oplus}{N}H_2)_s-\text{alkylène}-\overset{\oplus}{N}H_3 \quad ; \quad (s+1)\ X^{\oplus}$$

avec s = 0 à 3.

Conformément à l'invention, les composés organosiliciés aminés et salifiés **(C)** dans lesquels z' ou z" $\neq 0$, ont ceci de particulier qu'ils permettent d'élargir la gamme des carboxylates métalliques susceptibles d'être mis en oeuvre dans la condensation, à tous ceux dont le reste $R^1$ ne comprend pas au moins un carbone quaternaire et/ou au moins deux de carbones tertiaires et ayant moins de trois atomes de carbone. Cela concerne notamment les alkyles non ramifiés ou monoramifié sur un seul carbone, tels que les acétates, propropionates, butanoates, pentanoates, hexanoates (éthyl-2-hexanoate), heptanoates, octanoates.

Dans la formule **C** ci-dessus, les radicaux $R^9$, $R^{10}$ et $R^{11}$ représentent avantageusement un méthyle, un éthyle, un propyle, un hydrogène, un cyclohexyle, un phényle, un perfluoropropyle, un vinyle, etc.

Comme exemple de radicaux $R^{12}$ on peut citer le méthyle.

Ces composés siliciés **C** peuvent être des résines liquides susceptibles d'être obtenues par cohydrolyse de chlorosilanes ou d'alcoxysilanes, ou encore par cohydroalcoolyse de chlorosilanes.

En utilisant la terminologie classique MDTQ des silicones, et la symbolique définie ci-après, il est possible de caractériser des formes préférées des susdites résines, analysées par R.M.N.$^{29}$ Si.

| | |
|---|---|
| $D^2 = (R^{10})_2\ SiO_{2/2}$ | $D^1(OR^{12})=(R^{10})_2\ Si(OR^{12})O_{1/2}$<br>$D^0(OR^{12})=(R^{10})_2\ Si(OR^{12})_2$ |
| $T^3=(R^{11})\ SiO_{3/2}$ | $T^2(OR^{12})= R^{11}\ Si(OR^{12})O_{2/2}$<br>$T^1(OR^{12})=R^{11}\ Si(OR^{12})_2O_{1/2}$<br>$T^0(OR^{12})=R^{11}\ Si(OR^{12})_3$ |
| $Q^4=SiO_{4/2}$ | $Q^3(OR^{12})=Si(OR^{12})O_{3/2}$<br>$Q^2(OR^{12})=Si(OR^{12})_2O_{2/2}$<br>$Q^1(OR^{12})=Si(OR^{12})_3O_{1/2}$<br>$Q^0(DR^{12})=Si(OR^{12})_4$ |
| $D^2Z=ZR^{10}SiO_{2/2}$ | $D^1(OR^{12})=Z\ Si(OR^{12})O_{1/2}$<br>$D^0(OR^{12})=Z\ Si(OR^{12})_2$ |
| $T^3Z=ZSiO_{3/2}$ | $T^2Z(OR^{12})=Z\ Si(OR^{12})O_{2/2}$<br>$T^1Z(OR^{12})=Z\ Si(OR^{12})_2O_{1/2}$<br>$T^0Z(OR^{12})=Z\ Si(OR^{12})_3$ |

La terminologie étant ainsi définie, on peut préciser que les résines C renferment, par molécule, avantageusement, au moins un motif:

▽ $T^0$, $T^1(OR^{12})$ ou $T^2(OR^{12})^2$;

ou

∇ $TZ^0$ ou $T^1Z(OR^{12})$ ou $T^2Z(OR^{12})$

ou bien encore

∇ $Q^0$, $Q^1(OR^{12})$, $Q^2(OR^{12})^2$ ou $Q^3(OR^{12})^3$

par molécule.

Et de préférence, les résines **C**, ont une formule moyenne:

- a - $(OR^{12})$ DTTZ correspondant à :
  ou $(OR^{12})_t\ ((R^{10})_2\ SiO_{2/2})_u\ (R^{11}SiO_{3/2})_{y'}(ZSiO_{3/2})_z$
  u, y et z étant tels que définis supra et $0 \leq t \leq 3$
- b - $(OR^{12})$DQTZ correspondant à :
  $(OR^{12})_t\ ((R^{10})_2\ SiO_{3/2})_u(SiO_{4/2})_w(Z\ SiO_{3/2})_{z''}$
  u, w et z" étant tels que définis supra et $0 \leq t \leq 4$
- c - $(OR^{12})$ DTDZ correspondant à:
  $(OR^{12})_t\ ((R^{10})_2\ SiO_{2/2})_u\ (R^{11}\ SiO_{3/2})_y\ (ZR^{10}\ SiO_{2/2})_{z'}$
  u, y et z' étant tels que définis supra et $0 \leq t \leq 3$.

et renferment, par molécule, au moins un motif:

∇ $T^0$, $T^1\ (OR^{12})$ ou $T^2(OR^{12})$ ;

ou

∇ $T^0Z$ ou $T^1Z(OR^{12})$ ou $T^2Z(OR^{12})$

ou

∇ $Q^0$, $Q^1(OR^{12})$, $Q^2(OR^{12})$ ou $Q^3(OR^{12})$

$R^{10}$, $R^{11}$, $R^{12}$ et Z ont les mêmes significations que celles données ci-dessus.

La viscosité à 25 °C de ces résines est inférieure à 10000 mPa.s, de préférence à 1000 mPa.s. On peut les utiliser pures ou en dilution dans l'eau pour former une émulsion qui, selon la teneur en ammonium, peut présenter des tailles de gouttelettes très petites inférieures à 50 nm.

On obtient des compositions contenant uniquement du C à titre de composé silicié et vulcanisables à chaud en rajoutant un catalyseur de réticulation selon l'invention.

La teneur en métal du catalyseur varie en pratique entre 0,001 et 5 % poids par rapport au composé C, de préférence entre 0,1 et 1 %.

Selon un autre de ces aspects, la présente invention concerne un catalyseur de condensation susceptible d'être mis en oeuvre lors de la réaction entre au moins un motif (SiOH) et au moins un motif (SiR) avec R = H ou OR*, avec R* = hydrogène ou radical hydrocarboné monovalent ayant de 1 à 12 atomes de carbone, lesdits motifs SiOH/SiR appartenant à au moins un composé (organo)silicié en présence d'une quantité efficace d'un catalyseur organométallique,

caractérisé en ce que l'on sélectionne le catalyseur parmi les produits de formule suivante :

- *1* - $(R^1\ COO)_v\ M$

dans laquelle M = métal alcalin ou alcalino-terreux, v = valence de M et $R^1$ est un radical hydrocarboné, avec la condition selon laquelle ce radical hydrocarboné possède au moins un carbone quaternaire et/ou au moins deux carbones tertiaires et comprend, de préférence au moins trois atomes de carbone, cette condition s'appliquant dans le cas où le (ou les) composé(s) organosilicié(s) mis en oeuvre n'est (ne sont) pas aminé(s) et/ou salifié(s).

- ou leurs mélanges.

Le catalyseur peut avantageusement avec des cocatalyseurs choisi parmi les produits de formules suivantes :

- *2* - $R^{1*}\ COOH$

avec $R^{1*}$ correspondant à un groupement $R^1$ tel que défini supra,

- *3* - $(R^2O)_v\ M$,

- *4* - $(R^2COCR^3R^4COR^5)_v\ M$

M et v étant tels que définis supra

et $R^2$, $R^3$, $R^4$, $R^5$ sont identiques ou différents et représentent l'hydrogène, un (cyclo)alkyle linéaire ou non en $C_1$-$C_{12}$ éventuellement insaturé, un aryle, un aralkyle, un arylalkyle, un organosilicié (de préférence du type silanolate ou siloxanate) lesdits radicaux hydrocarbonés étant éventuellement substitués et avantageusement (per)halogénés,

- 5 -

ou leurs mélanges.

Le catalyseur préféré suivant l'invention est celui dans lequel le métal M des formules 1, 3 et 4 appartient au groupe suivant : Li, Na, K, le Li étant préféré.

Dans le cas N° 1 visé supra ($R^1 = R^{\alpha}$), le néodécanoate de lithium et/ou le triméthyl-3,5,5-hexanoate de lithium sont particulièrement préférés.

Ce catalyseur peut être mis en émulsion avec au moins un tensioactif ionique ou non. Ainsi, dans le cas de mise en oeuvre d'une résine (**C**), il peut être préparé sous forme d'émulsion préalablement à son incorporation dans la résine (**C**) émulsionnée ou non.

Comme cela ressort déjà de ce qui précède l'invention donne accès à deux voies essentielles d'application qui sont :

- d'une part la fonctionnalisation par condensation de composés siliciés notamment de type $\mathbf{A_1}$, $\mathbf{A_2}$ et **C**, à l'aide de silanes **B**,
- et d'autre part la réticulation par condensation, de composés siliciés par exemple du type $\mathbf{A_1}$, $\mathbf{A_2}$, et **C**, fonctionnalisés ou non, éventuellement à l'aide de silanes B, étant entendu que ces condensations ne sont pas exclusives, ni incompatibles avec d'autres mécanismes de fonctionnalisation et/ou réticulation.

La fonctionnalisation permet de conduire à des polymères $\mathbf{A_1}$, $\mathbf{A_2}$ porteurs de greffons réactifs amenés par condensation avec au moins un silane **B** conformément à l'invention. Ces polymères greffés peuvent être réticulables entre eux en présence d'eau (hydrolyse/condensation) et/ou par tout autre mécanisme de réticulation (hydrosilylation - rupture de cycle époxyde...).

La présente invention a également pour objet un catalyseur adapté à la fonctionnalisation de POS **A** particuliers. Ce catalyseur est susceptible d'être mis en oeuvre lors de la réaction entre :

→ au moins un polyorganosiloxane **A** (POS) dont au moins une des extrémités silicium comprend au moins un hydroxyle ou un radical hydrolysable ou condensable;
ledit POS répondant de préférence à la Formule ($\mathbf{A_1}$) suivante :

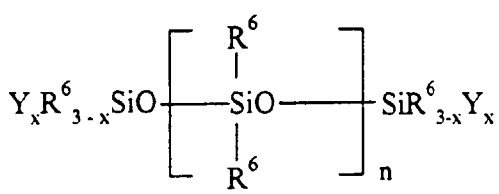

($A_1$)

avec

- x=0,1,2 ou3
- n entier supérieur ou égal à 1 de préférence à 10,
- les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

  les radicaux méthyle, éthyle, propyle, butyle étant plus particulièrement sélectionnés,

- Y représentant des groupes identiques ou différents et hydrolysables ou condensables ou bien encore hydroxyles ;
- au moins une partie des radicaux $R^6$ pouvant éventuellement correspondre à Y, ledit POS **A** présentant un ratio molaire $R^6/Si \geq 2$ ;

→ et au moins un silane **B** de formule générale :

$$\mathbf{(B)} \qquad R^7_{4-a}\,Si\,Y'_a$$

dans laquelle :

- $R^7$ a les significations données plus haut à la formule $\mathbf{A_1}$
- Y' représente des groupes hydrolysables ou condensables, identiques ou différents,
- et a est égal à 3 ou 4.

Ce catalyseur est constitué par au moins un produit de formule $R^{\gamma}COOLi$, dans laquelle $R^{\gamma}$ répond à la même définition que celle donnée supra pour $R^{\alpha}$ et $R^{\beta}$; $R^{\gamma}$ étant, de préférence, un alkyle en $C_1$-$C_{30}$, avantageusement en $C_1$-$C_{18}$, linéaire ou ramifié ($R^{\gamma}$ n'étant pas limité à $R^{\alpha}$ dans ce dernier cas), un aryle, un aralkyle ou alkylaryle, le méthyle et l'éthyl-2-pentyle étant particulièrement préférés.

Selon un autre de ses aspects, la présente invention concerne une composition silicone réticulable, éventuellement en présence d'eau, comprenant au moins un composé silicié **A** ($\mathbf{A_1}$ et/ou $\mathbf{A_2}$) fonctionnalisé par condensation à l'aide d'au moins un silane B.

Selon encore un autre aspect de l'invention, on s'intéresse à un autre type de composition silicone réticulable éventuellement en présence d'eau et comprenant :

- au moins un composé silicié **A** ($\mathbf{A_1}$ et/ou $\mathbf{A_2}$) fonctionnalisé ou non tel que défini supra,
- au moins un composé silicié **B** et/ou au moins un composé silicié C tels que définis ci-dessus,
- ainsi qu'au moins un catalyseur organométallique de formule - *1* - éventuellement associé à un ou plusieurs cocatalyseurs de formule - *2* - et/ou - *3* - et/ou - *4* - présentés ci-avant.

L'invention concerne également un autre type de composition silicone, réticulable en présence d'eau, pour reformer une résine, ladite composition comprenant :

- au moins une résine durcissable formée par un composé silicié **C** tel que défini supra,
- et au moins un catalyseur de condensation éventuellement associé à un ou plusieurs cocatalyseurs de formule - *2* - et/ou - *3* - et/ou - *4* - visés supra.

Une autre composition selon l'invention est celle réticulable, éventuellement en présence d'eau, et caractérisée en ce qu'elle comprend :

→ au moins un POS **A** , dont au moins une des extrémités silicium comprend au moins un hydroxyle ou un radical hydrolysable ou condensable ;
ledit POS répondant de préférence à la Formule $(\mathbf{A_1})$ suivante :

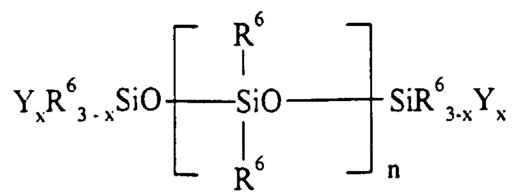

$(A_1)$

avec

- ♦ x = 0, 1, 2 ou 3
- ♦ n entier supérieur ou égal à 1 de préférence à 10,
- ♦ les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

  les radicaux méthyle, éthyle, propyle, butyle étant plus particulièrement sélectionnés,

- ♦ Y représentant des groupes identiques ou différents et hydrolysables ou condensables ou bien encore hydroxyles;
- ♦ au moins une partie des radicaux $R^6$ pouvant éventuellement correspondre à Y, ledit POS **A** présentant un ratio molaire $R^6/Si \geq 2$ ;

→ au moins un silane **B** de formule générale :

$$\mathbf{(B)} \qquad R^7_{4-a}\,Si\,Y'_a$$

dans laquelle :

- $R^7$ a les significations données plus haut à la formule $\mathbf{A_1}$
- Y'représente des groupes hydrolysables ou condensables, identiques ou différents,
- et a est égal à 3 ou 4 ;

→ ainsi qu'une quantité efficace d'un catalyseur organométallique, constitué par au moins un produit de formule $R^\gamma$ COOLi, dans laquelle $R^\gamma$ répond à la même définition que celle donnée supra pour $R^\alpha$ et $R^\beta$ ; $R^\gamma$ étant, de préférence, un alkyle en $C_1$-$C_{30}$, avantageusement en $C_1$-$C_{18}$, linéaire ou ramifié ($R^\gamma$ n'étant pas limité à $R^\alpha$ dans ce dernier cas), un aryle, un aralkyle ou alkylaryle, le méthyle et l'éthyl-2-pentyle étant particulièrement préférés.

Outre cette distinction selon leurs constituants, il est également possible de diviser en deux grandes familles les compositions silicones de l'invention. La première famille est constituée par les systèmes monocomposant ou à un seul emballage stable au stockage à l'abri de l'humidité de l'air.

Dans ce cas, le durcissement en élastomère s'effectue grâce à l'humidité de l'air; sachant que ces systèmes sont caractérisés par un ratio SiOH/SiOR* inférieur ou égal à 0, 1%. Ces systèmes monocomposants comprennent éventuellement un activateur de réticulation, propre à augmenter la quantité d'eau disponible pour l'hydrolyse.

La deuxième famille, qui est la famille préférée dans le cadre de la présente invention est constituée par des systèmes à plusieurs composants ou à plusieurs emballages, de préférence 2. La présente invention a donc également pour objet des systèmes d'élastomères silicones réticulables comprenant au moins deux composants (I) et (II) susceptibles d'être mis en présence pour réticuler et former un matériau dur, le composant (I) comportant au moins un composé silicié A tel que défini supra tandis que l'autre composant (II) contient au moins un composé silicié B ou C, l'un et/ou l'autre des composés (I) et (II) comportant en outre, d'une part, au moins un catalyseur et éventuellement au moins un cocatalyseur - *2* - et/ou - *3* - et/ou - *4* - tel que défini supra et d'autre part de l'eau.

Il est à noter que les compositions ou les systèmes selon l'invention peuvent comporter des charges et/ou des plastifiants, ayant de préférence un caractère neutre ou légèrement basique.

Les charges envisageables sont des charges renforçantes ou semi-renforçantes ou de bourrage. Elles sont de préférence choisies parmi les charges siliceuses, neutres ou basique du type silices de terre de diatomées ou parmi les carbonates. Ces silices ont une surface spécifique, mesurée selon les méthodes BET, d'au moins 50 $m^2$ / g, de préférence supérieure à 70 $m^2$/g, une dimension moyenne des particules primaires inférieure à 0,1 μm (micromètre) et une densité apparente inférieure à 200 g/litre.

Ces silices peuvent être incorporées, de préférence telles quelles, ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysiloxanes tels que l'hexaméthylsilazane, l'hexaméthylcyclotrisilazane, des chlorosilanes tels que le diméthyldichlorosilane, le triméthylchlorosilane, le méthyvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ. On peut généralement utiliser de 0 à 100 parties, de préférence de 5 à 50 parties de charge pour 100 parties d'huile **A**.

Les bases de compositions de silicone définies de façon générale ci-dessus sont bien connues de l'homme de métier. Elles sont décrites en détail dans la littérature en particulier dans de nombreux brevets et la plupart sont disponibles dans le commerce.

Comme exemple de composition préférée **A/B** et/ou **C** avec **A** = POS α-ω diOH, on peut citer :

- 100 parties en poids d'une huile alpha-oméga-dihydroxyorganopolysiloxane **A** de viscosité de 50 à 300 000 mPa. s, dont les radicaux organiques sont choisis parmi les radicaux méthyl, éthyle, vinyle, phényle et trifluoro-3,3,3-propyle, au moins 60 % en nombre de ces radicaux étant des méthyles, jusqu'à 20 en nombre étant des radicaux phényles, au plus 2 % étant des radicaux vinyles,
- de 0,5 à 200 parties en poids de composés siliciés (poly)alcoxysilane **B** et/ou (poly)organoalcoxysiloxane **C** porteurs de motifs Si R, de préférence SiOR*.
- 0,01 à une partie (calculée en poids) de métal (M) du catalyseur de formule - *1* - selon l'invention.
- 0 à 100 parties de préférence 5 à 50 parties de charge minérale siliceuse neutre ou basique.

Les compositions élastomères de ce type sont avantageusement utilisées :

- pour la réalisation de revêtements, notamment antiadhérent, de supports solides, de nature variée, par exemple en pierre, béton, métal, bois, verre, céramique, papier, carton ;
- pour l'enduction de matériau fibreux tissés ou non,
- ou à titre de mastic ou de matériau d'étanchéification.

Comme exemple de composition de type **(C)**, on mentionnera celle comportant :

- 100 parties en poids de POS **C**,
- 0,1 à 1 parties de M du catalyseur de formule - *1* -.

Ces résines **C** sont applicables en couche mince sous la forme de films de 0,01 µ à 100 µ ou encore sous la forme de couches épaisses de plusieurs millimètres d'épaisseur sur des supports aussi divers que des plastiques à haut point de ramollissement > 100 °C, de la pierre, du béton, du verre, des pièces en céramique... entre autres.

L'application peut se faire sous la forme d'une pulvérisation de la solution aqueuse ou de la résine liquide pure, d'un spray ou brouillard liquide obtenu par nébullisation véhiculé par un gaz, sous la forme d'une enduction mécanique à l'aide d'un pinceau de rouleaux.

Ces résines permettent l'obtention très rapide de revêtements très durs, de liants de matériaux composites apportant un pouvoir hydrofugeant et une résistance à la température par exemple dans le cas de la laine de verre ou de roche.

Les températures de réticulation des résines C sont comprises entre 40°C et 300°C et de préférence entre 70°C et 260 °C.

Les autres exemples non limitatifs qui suivent, illustrent la mise en oeuvre du procédé de condensation selon l'invention à l'aide des catalyseurs originaux. Les produits exemplifiés sont des polyorganosiloxanes de type **A**, **B** et/ou **C** d'une part, et de type **C** (résine), d'autre part.

**EXEMPLES:**

**I - Exemples 1 à 13 : Compositions silicones obtenues par condensation (SiOH) / (SiOR) se présentant sous forme huileuse**

Dans les exemples 1 à 13 qui suivent qui décrivent l'invention on utilise un néodécanoate de lithium commercialisé par RHONE-POULENC ltd sous l'appellation Manosec Lithium à 2% de lithium, de formule générale Li(néodécanoate)$_{0,9}$(acétate)$_{0,1}$ dans le white-spirit avec 4% de monométhyléther de diéthylène glycol pour modifier la viscosité. Ce produit sera ci-après dénommé **catalyseur 1/**. Un deuxième catalyseur correspond à ce produit tamponné par un excès d'une coupe C8,C9,C10 d'acides cékanoïques commercialisés par EXXON de manière à ramener la concentration en lithium à 1%. Ce deuxième produit sera appelé **catalyseur 2/**.

**Exemple 1:**

Dans cet exemple nous avons réalisé la réaction d'une huile diméthylsiloxane α-ω dihydroxy avec un silane alcoxylé à fonctionnalité époxyde ;

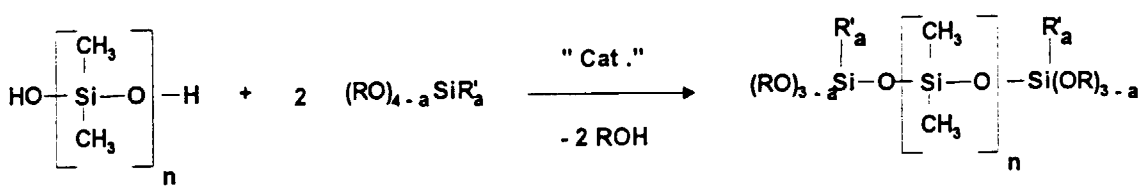


n= 4,2

$(RO)_{4-a}SiR'_a$ =

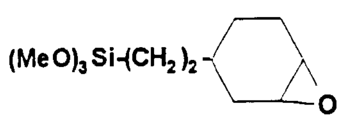

A 100 parties d'huile siloxane α-ω diOH de viscosité de l'ordre de 500 mPa.s, on ajoute 131 parties de silane à fonctionnalité epoxy à 20°C tel que le rapport $Si(OR)_3/SiOH$= 0,89. On rajoute alors sur une fraction aliquot de 3g

a) 100 ppm de lithium sous la forme du **catalyseur 1/**

b)100 ppm de lithium sous la forme du catalyseur décrit dans US 5 079 314 sous la forme d'une solution méthanolique de lithine $LiOH.H_20$ à 4% dans le méthanol .

c) 1% d'acétate de sodium

On suit l'évolution de la réaction par R.M.N$^{29}$Si au cours du temps.
Les résultats de R.M.N $^{29}$Si sont exprimés de la façon suivante

$T^0$(OR) = silane de départ
$T^1$ (OR)= $(MeO)_2$(époxy)$SiO_{1/2}$
$T^2$(OR)=(MeO)(époxy)$SiO_{2/2}$
$T^3$ = (époxy)$SiO_{3/2}$
DOH = $Me_2Si(OH)O_{1/2}$
D = $Me_2SiO_{2/2}$
TT = taux de transformation en pourcentage par rapport au réactif
RR = Rendement relatif au produit formé
RT = Rendement théorique qui exprime la sélectivité de la réaction par rapport à un produit = RR/TT exprimé en pourcentage.

Les résultats sont sommés à 100% pour les motifs T et D
Après une nuit de réaction à 20°C.
On obtient les résultats suivants :

a)

| | | |
|---|---|---|
| TT | $T^0$(OR) | = 76% |
| RR | $T^1$(OR) | = 59,2% |
| RR | $T^2$(OR) | = 17,2% |
| RR | $T^3$ | = 0% |
| TT | DOH | = 85% |

La sélectivité de la réaction par rapport au produit attendu est de 78%

b)

| | | |
|---|---|---|
| TT | $T^0$(OR) | = 97,4% |
| RR | $T^1$(OR) | = 17,7% |
| RR | $T^2$(OR) | = 61,2% |
| RR | $T^3$ | = 18,5% |
| TT | DOH | = 47,9% |
| RR | $Me_2Si(OMe)_2$ | = 6,8% |

La sélectivité de la réaction par rapport au produit attendu est de 18% et il est vraisemblable que cela ne corresponde pas au bon produit attendu puisqu'une fraction seulement des silanols sont consommés. Il est plus probable que les motifs $T^1$(OR) correspondent à la dimérisation du silane de départ.

c) On n'observe pas de réaction. Les taux de transformation sont nuls.

**Exemple 2 :**

On procède de la même façon qu'à l'exemple 1, exceptée la température de la réaction qui est portée à 70°C.
On obtient alors les résultats suivants :

a) après 80 mn à 70°c

| | | |
|---|---|---|
| TT | $T^0$(OR) | = 72% |
| RR | $T^1$(OR) | = 60% |

(suite)

| | | |
|---|---|---|
| RR | $T^2(OR)$ | = 12% |
| RR | $T^3$ | = 0% |
| TT | DOH | = 80% |

La sélectivité de la réaction est supérieure à 80%
La fonction époxyde n'est pas affectée et on dose 230 meq époxy pour 100g d'huile.

b) après 20 minutes à 70°c

| | | |
|---|---|---|
| TT | $T^0(OR)$ | = 100% |
| RR | $T^1(OR)$ | = 50% |
| RR | $T^2(OR)$ | = 50% |
| RR | $T^3$ | = 50% |
| RR | $Me_2Si(OMe)_2$ | = 20,4% |

Les réactions de coupure de la chaine polysiloxane sont majoritaires et on polycondense le silane sur lui même.

c) Il n'y a pas de réaction.

**Exemple 3 :**

On répète la même opération avec une huile de structure identique, de poids moléculaire beaucoup plus élevé (Mn = 44500) correspondant à une viscosité de 20000 mPa et comportant 0,057% de fonctions hydroxy.

On introduit 800 parties de cette huile silicone avec 24 parties du silane à fonctionnalité époxy tel que décrit exemple 1 et on ajoute 4 parties du **catalyseur 1/** dans un réacteur muni d'une agitation tripale sous azote. On porte alors le mélange par chauffage et sous agitation à 100°c pendant deux heures puis on refroidit le mélange. On obtient une huile de viscosité 19400 mPa qui reste stable pendant plusieurs semaines. Le dosage des fonctions époxy est conforme à la quantité théorique attendue soit 12 meq /100g.

On prélève alors 60 g de l'huile fonctionnalisée et on ajoute trois gouttes de titanate de butyle. On mélange vigoureusement à la spatule pendant une minute et on laisse reposer 5 minutes. On mesure alors la viscosité qui est de 18350 mPa. On répète la même manipulation à partir de l'huile de départ et on obtient un gel après le rajout de titanate de butyle, qui réagit instantanément sur les fonctions hydroxy de l'huile de départ.

**Exemple 4 :**

On réalise un exemple comparatif par rapport à l'exemple 3 en utilisant une solution de lithine dans le méthanol à 4% (12,36g) à la place du **catalyseur 1/**. Après réaction pendant deux heures à 100°c avec le silane à fonctionnalité époxy on laisse revenir le mélange à température ordinaire et on obtient une huile de viscosité 2180 mPa qui correspond à une dépolymérisation avec formations de cycliques siloxane et de diméthyldiméthoxysilane.

**Exemple 5 :**

Dans le même réacteur que celui décrit à l'exemple 3, on introduit successivement sous atmosphère inerte 800 parties de l'huile décrite exemple 3, 24 parties de vinyltriméthoxysilane, et 4,17 parties de carboxylate de lithium que forme le **catalyseur 1/**.

On chauffe deux heures à 100°C et on neutralise la basicité résiduelle par rajout d'acide cékanoïque après retour à 40°C.

On mesure la viscosité de l'huile qui est de 19500 mPas.

Le test au titanate de butyle n'engendre pas d'augmentation de viscosité.

**Exemple 6 :**

Dans le même réacteur que celui décrit à l'exemple 3 on introduit successivement 800 parties d'huile polydiméthylsiloxane $\alpha$-$\omega$dihydroxy de viscosité 20000mPa; 40 g de triéthoxysilane dont une partie est en excès et 8,30g de

**catalyseur 2/**.

On fonctionnalise 30 minutes en veillant à ce que la température ne dépasse pas 60°C puis on refroidit le mélange réactionnel .

On montre alors que le catalyseur de fonctionnalisation ne gêne en rien une hydrosilylation successive :

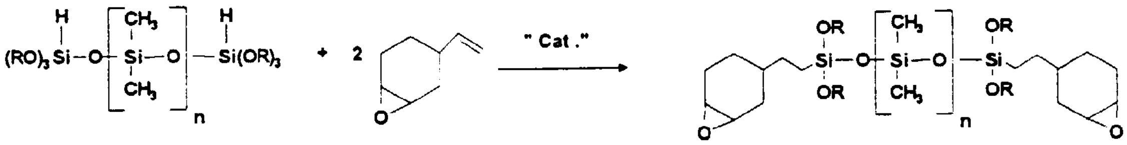


On coule alors un mélange de vinylcyclohéxène monoxyde 30,55g et d'une solution de platine de Karstedt à 13,6% dans l'hexane soit 50 mg dans le milieu réactionnel en six minutes et on chauffe à 80°C pendant deux heures. On refroidit puis on coupe l'agitation lorsque le mélange est revenu à température ambiante. Le dosage des fonctions hydrogénosilyle par mesure du dégagement d'hydrogène en présence de potasse méthanolique indique que tous les hydrogènes ont été consommés. La viscosité de l'huile est de 22250 mPa et le test au titanate de butyle n'engendre pas d'augmentation de viscosité. On reste à 22000 mPa. L'huile est stable à température ambiante et le dosage des fonctions époxy indique une valeur proche de la théorie soit 24,5 meq époxy / 100 g.

**Exemples 7 à 13 ; Etude de la variation de la température réactionnelle et de la quantité de catalyseur 1**

Le polyorganosiloxane **A** mis en oeuvre est le même que celui de l'exemple 1, à l'exception de n = 58,8 et de la masse molaire en nombre Mn = 4370.

Le silane **B** est identique à celui utilisé dans les exemples 1 à 6.

Les conditions expérimentales de condensation entre A et B, de même que les résultats d'analyse RMN$^{29}$ sur les produits de condensation, sont donnés ci-après notamment dans le **TABLEAU 1 :**

TABLEAU 1 :

| **Fonctionnalisation d'un polydiméthylsiloxane α-ω-dihydroxylé A/ par un silane B à groupement époxyde** | | | | | | | |
|---|---|---|---|---|---|---|---|
| **Exemples** | **7** | **8** | **9** | **10** | **11** | **12** | **13** |
| Cata. 1 (ppm) | 10 | 10 | 20 | 10 | 50 | 100 | 10 |
| Température (°C) | 20 | 60 | 60 | 60 | 60 | 60 | 20 |
| **A** (% p/p) | 59,3 | 58,4 | 62,8 | 64,7 | 66 | 66,2 | 65,6 |
| Xylène (% p/p) | 23,9 | 23,8 | 29,55 | 27,2 | 26,4 | 26,1 | 26,6 |
| Silane **B** (% p/p) | 16,8 | 17,8 | 7,65 | 8,1 | 7,6 | 7,7 | 7,8 |
| [Epoxy]/[OH] | 2,44 | 2,6 | 1,05 | 1,08 | 1,00 | 1 | 1 |
| **R.M.N.$^{29}$ Si après dévolatilisation** | | | | | | | |
| D(OR) | 0,8 | 1,2 | 0,75 | 0,7 | 0,3 | 0,4 | 0,5 |
| D(OH) | 0,45 | 0,3 | 0,15 | 0,35 | 0,2 | 0,15 | 0,4 |
| D | 90,5 | 89,7 | 95,2 | 95,1 | 96 | 95,9 | 95,4 |
| $T^0$(OR) | 5,2 | 5,0 | 0,6 | 0,9 | 0,8 | 0,55 | 1,1 |
| $T^1$(OR) | 2,9 | 3,5 | 2,8 | 2,7 | 2,4 | 2,5 | 2,5 |
| $T^2$(OR) | 0,15 | 0,3 | 0,5 | 0,25 | 0,3 | 0,5 | 0,1 |
| TT[D(OH)%] | 85,6 | 90 | 95,4 | 89,3 | 93,9 | 95,6 | 88 |
| RR[$T^1$(OR)%] | 89,5 | 112 | 85,6 | 82 | 73 | 76 | 76 |
| $T^3$ | / | / | / | / | / | / | / |
| Epoxy (meq %) après dévolatilisation | 87 | 92 | 43 | 44 | 41 | 42 | 44 |

**Conditions expérimentales :**

- Condensation **A/B** : 5 heures

Le solvant utilisé est le xylène

- Dévolatilisation : 1 heure à 90° C sous 10 mbars

**Exemples 14 à 21 : Fonctionnalisation de deux polydiméthylorganosiloxanes α-ω-dihydroxylés A' et A" par un silane B à groupement époxyde**

Les produits **A'**, **A"** et **B** mis en oeuvre sont les suivants :

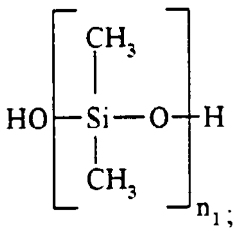

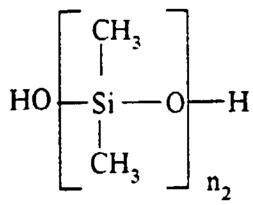

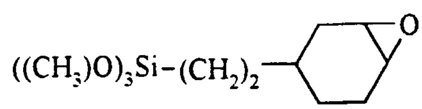

| A' | A" | Silane B |
|---|---|---|
| $n_1 = 38$<br>Mn = 2830 | $n_2 = 183{,}5$<br>Mn = 13600 | |

Les conditions expérimentales de condensation entre **A'** et/ou **A"** et **B**, de même que les résultats d'analyse $RMN^{29}$ sur les produits de condensation, sont donnés ci-après notamment dans le tableau 2.

TABLEAU 2 :

| **Fonctionnalisation de A' et/ou A" par un silane à groupement époxyde** | | | | | | | | |
|---|---|---|---|---|---|---|---|---|
| **Exemples** | **14** | **15** | **16** | **17** | **18** | **19** | **20** | **21** |
| **A'** (% p/p) | 60,7 | 0 | 0 | 0 | 45,6 | 36,7 | 30,8 | 24,7 |
| **A"** (% p/p) | 0 | 96,4 | 69,3 | 67,9 | 22,5 | 36,5 | 46 | 55,4 |
| Dx (% p/p) | 30 | 0 | 0 | 0 | 22,5 | 18 | 15,2 | 12,2 |
| Xylène (% p/p) | 0 | 0 | 27,4 | 27,2 | 0 | 0 | 0 | 0 |
| Silane **B** (% p/p) | 9,3 | 3,6 | 3,3 | 4,9 | 9,4 | 8,8 | 8 | 7,7 |
| [Epoxy]/[OH] | 0,8 | 1,0 | 1,3 | 2 | 0,98 | 1,05 | 1,05 | 1,14 |
| **$R.M.N.^{29}$ Si après dévolatilisation (% Si)** | | | | | | | | |
| D(OR) | 0,8 | 0 | 0 | 0 | 0,9 | 0,9 | 0,6 | 0,5 |
| D(OH) | 0,2 | 0,3 | 0,4 | 0,4 | 0 | 0 | 0 | 0 |
| D | 91,0 | 98,9 | 98,6 | 97,5 | 93,1 | 93,9 | 93,1 | 93,8 |
| Dx | 4,0 | 0 | 0 | 0 | 2,4 | 2,3 | 3,6 | 3,4 |
| $T^0$(OR) | 0,2 | 0,2 | 0,45 | 1,0 | 0,2 | 0,2 | 0,2 | 0,2 |
| $T^1$(OR) | 3,2 | 0,6 | 0,55 | 0,8 | 2,5 | 2,0 | 2,1 | 1,8 |
| $T^2$(OR) | 0,6 | 0 | 0 | 0,3 | 0,9 | 0,7 | 0,4 | 0,3 |
| $T^3$ | 0 | 0 | 0 | 0 | 0 | 0 | 0 | 0 |
| TT[D(OH)%] | 96 | 72 | 63 | 62 | 100 | 100 | 100 | 100 |

TABLEAU 2 : (suite)

| Fonctionnalisation de A' et/ou A" par un silane à groupement époxyde | | | | | | | | |
|---|---|---|---|---|---|---|---|---|
| **Exemples** | **14** | **15** | **16** | **17** | **18** | **19** | **20** | **21** |
| **R.M.N.$^{29}$ Si après dévolatilisation (% Si)** | | | | | | | | |
| RR[$T^1$(OR)%] | 80 | 56 | 51 | 75 | 67 | 63 | 60 | 66 |
| Epoxy (meq %) après dévolatilisation | 48 | 14 | 16,6 | 23,7 | 43 | 39 | 33 | 32 |
| Viscosité (mPa.s) | 47 | 900 | 900 | 900 | 150 | 200 | 260 | 330 |

**<u>Conditions expérimentales</u> :**

- Condensation **A'** et/ou **A"** et silane **B**

  Catalyseur 1 : 50 ppm/ (B + C + Dx)
  Solvant : xylène
  Durée : 5 heures
  Température ° C : 60° C

- Dévolatilisation : 1 heure à 90° C sous 10 mbars

  $D_x$ : 72,7 % $D_4$ ; 21,8 % $D_5$ ; 5,5 % $D_6$

**Exemple 22 : Essais de réticulation de compositions élastomères réticulables en présence d'eau à base d'huile ($A_1$) α-ωdiOH, de réticulant silanique (B) et de catalyseur 1/ selon l'invention**

**22.1.** On prépare la composition suivante :

- Huile **($A_1$)** α-ω di OH de 100 p viscosité η = à environ 135 000 mPas
- Réticulant **(B)** polysilicate d'éthyle (PSE) 4 p
- **catalyseur 1/** 6 p. p = parties en poids.

Cela représente un ratio SiOR/SiOH d'environ 14 et 1200 ppm de Li.
La réticulation par hydrolyse/condensation est mise en oeuvre à 150°C.
On observe une bonne réactivité sur film de 0,5 mm.
La condensation de la composition en atmosphère ambiante, à 23°C est ≥ 6 heures.

**22.2.** La composition suivante :

- Huile **($A_1$)** α-ω di OH de η à environ 20000 mPas 100 p
- Réticulant **(B)** PSE 4 p SiOR/SiOH = 14
- **catalyseur 1/** 5 p (soit 1000 ppm Li)

donne des résultats similaires en réticulation, avec toutefois une amélioration de la réactivité à 100 °C : Durée de réticulation = 10 mn.

**22.3.** On examine maintenant l'influence des charges sur la réticulation en préparant la composition suivante :

- Huile **($A_1$)** α-ω di OH de η à environ 20000 mPas 100 p
- Huile **($A_1$)** α-ω di OH de η à environ 100 mPas 10 p
- charge CHx = 1 à 4 8 p
- Réticulant **(B)** PSE 4 p (Soit SiOR/SiOH = 14)
- **catalyseur 1/** 5 p (soit 1000 ppm Li)

$CH_1$ = Silice de combustion - Aérosil 200 (acide pH = à environ 4)
$CH_2$ = Silice de terre de diatomée - Celite 350 (neutre pH = à environ 7)
$CH_3$ = Silice de terre de diatomée - Celite SF (basique pH = à environ 10)
$CH_4$ = Carbonate de Calcium - BLR 3 (basique pH > 9)

Les résultats obtenus sont les suivants :

- en présence d'une charge à caractère acide ($CH_1$) le carboxylate de Li est peu actif et la composition ne réticule presque pas.
- Une charge neutre $CH_2$ ou basique $CH_3$ et $CH_4$ permet une réticulation en quelques minutes à 150 °C et permet d'accéder à un élastomère ayant un niveau de propriétés mécaniques correct. La conservation à température ambiante reste de très courte durée comme ceci a été observé précédemment.

La réticulation des produits incluant $CH_2$ et $CH_3$ se déroule en un temps de l'ordre de 5 minutes à 150 °C alors que, pour le produit (3), 10 minutes sont nécessaires.

**22.4. Remarques générales :**

Toutes les compositions basées sur le système ($A_1$= α-ω-diOH + B = Polysilicate d'éthyle) sont auto-adhérentes.

Les systèmes réticulants évalués peuvent être du type monocomposant réticulable à chaud.

Ces produits sont également très intéressants (en particulier; du point de vue économique) : en version bicomposant :

* [I = $A_1$(=α-ω-diOH haute viscosité) + B (= PSE)
* et II = $A_1$ (=α-ω-diOH basse viscosité) + **catalyseur 1** /]

Le carboxylate de Li est très attractif dans la mesure ou l'on peut utiliser une charge renforçante à caractère neutre ou basique dans la composition.

**II - Exemples 23 à 27 : Compositions silicones obtenues par condensation (SiOH) / (SiOR) se présentant sous forme de résines dures.**

Dans ces exemples 23 à 26 la réactivité des résines de l'invention a été déterminée :

a) en suivant l'évolution de viscosité des compositions sur RAPRA VNC (Vibrating Needle Curemeter) de Rapra Technologie ; On mesure le temps nécessaire pour obtenir la gélification (temps en minutes) à l'aide d'une aiguille vibrant dans le bain à une fréquence de 40 Hz ; On porte la composition à 150°C et on mesure le temps nécessaire pour atteindre le point d'inflexion de la courbe différence de potentiel = f (temps) qui doit se situer en dessous de 30 mV pour que la réticulation soit complète.
b) en suivant l'évolution de module d'une tresse de fibre de verre (3250 brins unitaires) imprégnée pendant une demi-heure à 20°C par la composition.

On effectue au préalable après imprégnation une hydrolyse contrôlée de la résine silicone pendant 7 heures à 20°C dans une enceinte à degré d'hygrométrie constant (100% d'humidité relative) puis on installe la tresse prépesée sur un pendule de torsion encore appelé pendule à fibres dans une enceinte thermostatée sous atmosphère d'hélium. On effectue un premier cycle thermique de montée en température de -100°C à 250°C où l'on mesure tous les 5°C l'amortissement et la rigidité du produit correspondant au temps que met la tresse pour retrouver la position d'équilibre lorsqu'on l'écarte de celle ci.

On maintient une demi-heure à 250°C puis on redescend à -100°C et on effectue une deuxième montée en température. On mesure la perte de masse pendant la réticulation.

**Exemple 23 :**

On teste dans cet exemple la réticulation d'une résine Q(OEt) obtenue par hydrolyse ménagée de silicate d'éthyle et comportant 1400 meq OEt/100g.

La proportion molaire des différents motifs est la suivante :

| | |
|---|---|
| $Q^0(OEt)$: | 0,6% |
| $Q^1(OEt)$: | 39% |
| $Q^2(OEt)$: | 42,4% |
| $Q^3(OEt)$: | 18% |

de formule moyenne $SiO_{(3,6)}/_2(OEt)_{2,21}$

On prépare une composition réticulable en un élastomère en mélangeant :

100 parties d'une huile polydiméthylsiloxane α-ω di OH de viscosité 135000 mPa.s.
4 parties du polysilicate d'éthyle précédent

et en rajoutant un catalyseur de réticulation à raison de 1200 ppm de métal.

La réactivité est mesurée au RAPRA VNC .

On a comparé l'activité de deux catalyseurs l'un à base d'octoate de fer (III), et l'autre à base de carboxylate de lithium ayant un carbone tertiaire.

On montre sur la figure unique annexée que l'activité du lithium est supérieure à celle de l'octoate de fer. Le Lithium permet en particulier d'atteindre un degré de réticulation supérieur :

On atteint 30 mV avec le "fer" en 4mn à 150°C et on en reste là.

On atteint 30 mV avec le "lithium" en 4mn à 150°C et la réticulation se poursuit pour atteindre 20 mV après 8 mn.

**Exemple 24 : Synthèse d'une résine DQ($OR^{12}$)TZ**

**Phase 1 : Synthèse d'une résine DQ($OR^{12}$)**

Dans un réacteur en verre de 2 litres avec une double enveloppe un agitateur central en téflon, une vanne de fond, un réfrigérant ascendant et une régulation thermique on charge :

| | |
|---|---|
| 380,5g de silicate de méthyle (PM=152,22) : | 2,5 moles (2,5 moles de motifs Q) |
| 556,1g d'octaméthyltétrasiloxane (PM=296,62) : | 1,87 moles (7,5 moles de motifs D) |
| 40g d'eau : | 25 moles d'eau si on compte l'eau apportée par l'acide chlrohydrique |
| 8,88g Solution $HCl/H_2O$(30%) : | 0,073 moles HCl |

La température de la masse réactionnelle passe de 22°C à 41°C sous agitation et ciel d'azote lorsqu'on introduit l'acide chlorhydrique en deux minutes.

Après une heure la température de la masse réactionnelle est encore de 29°C.

Après deux heures d'agitation la masse réactionnelle est à une température de 25°C.

On neutralise alors l'acide chlorhydrique en rajoutant du bicarbonate de sodium soit 14,95g ou 178 mmoles.

On laisse sous agitation pendant 35 mn à 25°C.

On filtre alors sur Büchner en présence d'une terre à base d'argile (Clarcel) la résine.

On récupère 912,4 g d'une résine DQ($OR^{12}$).

Le taux de transformation de l'octaméthyltétrasiloxane mesuré par C.P.V est supérieur à 98%.

La viscosité de la résine est de 9,4 $mm^2/s$ et de 10,4 $mm^2/s$ après 4 mois de stockage à 20°C.

**L'analyse par R.M.N $^{29}Si$ donne la répartition des motifs :**

| | | |
|---|---|---|
| $D^0(OMe)$: | 1,2 % | |
| $D^1(OMe)D$: | 15,3 % | |
| $D^1(OMe)Q$: | 3,6 % | |
| $D^2$: | 55 % | |
| $Q^0(OMe)$: | 0 % | Le ratio Si(OMe)/Si= 0,46 |
| $Q^1(OMe)$: | 0 % | |
| $Q^2(OMe)$: | 4,4 % | |

(suite)

| | | |
|---|---|---|
| $Q^3$(OMe):<br>$Q^4$: | 15,6 %<br>4,9 % | |

**Phase 2 : Fonctionnalisation par un silane aminé DQ($OR^{12}$)TZ**

On ajoute une fraction de cette résine 50 g dans un réacteur de 100 ml sous agitation magnétique. On rajoute alors 6,39 g de silane aminopropyltriméthoxysilane soit 35,7 mmoles ou 1% N par rapport à la masse totale puis 0,123 g de potasse méthanolique soit 0,614 mmoles. On porte 3 heures à 70° le mélange sous azote. On atteint le reflux et la masse réactionnelle devient trouble .

Après refroidissement de la masse réactionnelle on neutralise par une solution d'acide chlorhydrique à 30% soit 80 mg ou 0,676 mmoles.

On filtre la résine sur Bûchner.

La viscosité est de 11 $mm^2/s$.

**L'analyse par RMN$^{29}$Si révèle la distribution des motifs suivante :**

$D^o(OR^{12})$ : 1,9 %
$D^1(OR^{12})Q + D^1(OR^{12})D$ : 18,7%
$D^2$ : 53,6%
$T^o(OR^{12})$ : 0,2%
$T^1(OR^{12})$ : 1,3%
$T^2(OR^{12})$ : 2,2% Le ratio $Si(OR^{12}) / Si = 0,59$

$Q^o(OR^{12})$ : 0,4%
$Q^1(OR^{12})$ : 2,1%
$Q^2(OR^{12})$ : 6,8%
$Q^3(OR^{12})$ : 9,4%
$Q^4$ : 3,6%

NB ; La RMN ne permet pas de distinguer les motifs T des motifs TZ. Il s'ensuit que les pourcentages de motifs T mesurés correspondent à la somme T + TZ.

**Phase 3 : Réticulation**

On a étudié la réticulation de ces résines DQ($OR^{12}$)TZ avec différents catalyseurs à l'aide d'un pendule à fibres après 7 heures de préhydrolyse des échantillons.

Les modules obtenus sont exprimés en $Hz^2$ et $\Delta m$= perte de masse :

| | |
|---|---|
| + 2% octoate de fer à 6% en fer: | module = 0,38 |
| + 6% carboxylate de lithium à 2% en lithium: | module = 0,47 et $\Delta m$ = (18-3,7)/18 = 80% |
| + 2% octoate de fer à 6% en fer: | module = 0,70 et $\Delta m$ = 13% |
| + 6% carboxylate de lithium à 2% de lithium: | module = 0,89 et $\Delta m$ = (9,9-8,44)/9,9 = 15% |

**EXEMPLE 25 : Synthèse d'une résine DQ($OR^{12}$)**

**Phase 1: Synthèse**

Dans un réacteur de capacité 2 litres tel que décrit à l'exemple précédent on introduit :

| | |
|---|---|
| 380,5 g de silicate de méthyle : | 2,5 moles |
| 344,08g d'octaméthyltétrasiloxane soit un ratio D/Q=35/65 : | 1,16 moles |

(suite)

| | |
|---|---|
| 4,6 g d'eau : | 0,214 moles |
| 8,9 g d'HCl(30%) : | 0,073 moles et 5 g d'eau |

La réaction débute dès le rajout d'acide chlorhydrique à 22°C ; La température monte à 28°C.

On laisse sous agitation pendant 2h.

Il reste environ 12% d'octométhyltétrasiloxane non réagi.

On neutralise par du bicarbonate et on laisse sous agitation pendant une heure à température ambiante.

On filtre sur Büchner en présence de clarcel et on obtient une résine limpide soit 655,5 g et une viscosité de 1,83mm$^2$/s.

**L'analyse par R.M.N$^{29}$Si donne la répartition suivante :**

$D^o(OR^{12})$ : 0,9%

$D^1(OR^{12})D + D^1(OR^{12})Q$ : 21,6%

$D^2$ : 45% avec un ratio SiOMe/Si=1,17

$Q^o(OR^{12})$ : 5%

$Q^1(OR^{12})$ : 16,8%

$Q2(OR^{12})D + Q^2(OR^{12})$ : 8,8%

$Q^3(OR^{12})$ : 1,2%

$Q^4$ : 0,7%

**Phase 2 : Hydrolyse partielle des fonctions SiOR$^{12}$**

Dans un flacon en verre on ajoute successivement

20g de la résine (OR$^{12}$) DQ ci-dessus

1,27 g d'eau

0,258 g d'HCl (10%) soit : 0,7 mmoles HCl

0,232 g d'eau

On obtient un mélange limpide incolore après agitation quelques secondes à température ambiante. La durée de vie en pot de ces mélanges avant gélification est comprise entre une demi-heure et une heure.

**Phase 3 : Réticulation**

On étudie la réticulation de ces résines DQ(OR$^{12}$) avec différents catalyseurs à l'aide d'un pendule à fibres et après 7 heures de préhydrolyse de l'échantillon de référence ou en présence d'acide chlorhydrique pour effectuer l'hydrolyse avec un passage direct au pendule à fibres.

Les modules obtenus sont exprimés en Hz$^2$ et $\Delta m$ = perte de masse :

| | | |
|---|---|---|
| essai 10.1 | + 6% carboxylate de lithium à 2% en lithium : | module = 0,25 et $\Delta m$ = (6,6-3,78)/6,6 = 42% |
| essai 10.2 | + hydrolyse HCl: | module = 0,48 et $\Delta m$ = (14,3-10,4)/14,3 = 27% |
| essai 10.3 | + hydrolyse HCl + 2% octoate de fer à 6% en fer: | module = 0,50 et $\Delta m$ = (12,6-8,3)/12,6 = 34% |
| essai 10.4 | + hydrolyse HCl + 6% carboxy lithium à 2% de lithium: | module = 0,84 et $\Delta m$ = (33,8-16,7)/33,8 = 50% |

**Exemple 26 : Synthèse d'une résine DQ(OR$^{12}$)**

Dans un réacteur tricol de 500 ml muni d'une agitation centrale en téflon, d'une colonne de réfrigération ascendant et d'un système de régulation thermique, on ajoute :

| | |
|---|---|
| 126,8g de silicate de méthyle :<br>61,8 g d'octaméthylcyclotétrasiloxane :<br>1,8g d'eau :<br>2,31 g d'HCl(30%) soit 1,4 g d'eau : | 0,83 moles<br>0,2 moles<br>0,177 moles d'eau au total<br>0,019 moles HCl |

Dès le rajout d'acide chlorhydrique la température monte à 29°C.

On agite pendant deux heures entre 30 et 25°C.

Tout l'octométhylcyclotétrasiloxane est pratiquement consommé. Son taux de transformation est supérieur à 98%.

On neutralise la résine en rajoutant du bicarbonate de sodium (3,23 g soit 0,038 moles ) et on laisse sous agitation pendant une heure à température ambiante.

On filtre sur Büchner en présence d'une terre comme le clarcel et on obtient une résine incolore d'une masse de 143,6 g et de viscosité 1,6 $mm^2/s$.

**L'analyse R.M.N$^{29}$Si révèle la distribution des motifs suivants :**

| | |
|---|---|
| $D^0(OR^{12})^2$ : | 0,5 % |
| $D^1(OR^{12})Q + D^1(OR^{12})D$ : | 19,7 % |
| $QD^2+D^2$ : | 40,9 % |
| $Q^0(OR^{12})$ : | 11,1 % |
| $Q^1(OR^{12}) + Q^1(OR^{12})D$ : | 25,5 % |
| $Q^2(OR^{12}) + Q^2(OR^{12})D$ : | 8,5 % |
| $Q^3(OR^{12})$ : | 2,0 % |

**Exemple 27 : Synthèse d'une résine DT($OR^{12}$)TZ**

**Phase 1 : cohydrométhanolyse de chlorosilanes**

Dans un réacteur de 25 litres on charge 32,62 moles de diméthyldichlorosilane et 32,62 moles de propyltrichlorosilane. On coule un mélange méthanol eau soit 195,6 moles de méthanol et 21,77 moles d'eau en 3 heures et quinze minutes sous agitation. On maintient la température à 25°C. On porte à ébullition en fin de coulée et on maintient pendant 4heures et trente minutes. On laisse ensuite décanter une heure et on élimine la phase supérieure, ce qui représente environ 6% de la résine. On élimine les chlores résiduels en rajoutant du méthanol, successivement 1,7 ; 1,5 et 1,5 kg éliminé par distillation. On neutralise au bicarbonate de sodium 0,23 kg une demi heure à 40°C. On obtient 4,9 kg et 4,4 kg après filtration.

La résine a une viscosité de 27,9 mPa.s et l'analyse par R.M.N$^{29}$ Si révèle la distribution des différents motifs :

| | |
|---|---|
| $D^0(OR^{12})$ | 0,27% |
| $D^1(OR^{12})$ | 8,37% |
| $D^2$ | 30,7% |
| $T^0(OR^{12})$ | 0,2% |
| $T^1(OR^{12})$ | 6,56% |
| $T^2(OR^{12})$ | 28,8% |
| $T^3$ | 25,1% |
| MeOSi/Si | 0,51 mol/mol |
| Nota Bene : T = T + TZ | |

**Phase 2: redistribution**

Une fraction de la résine précédente est prélevée soit 0,547 kg. On rajoute dans un réacteur de 2 litres 0,201 kg de silane de formule $(CH_3O)_3Si-(CH_2)_3-NH-CH_2-CH_2-NH_2$ et 9,6 ml de potasse éthanolique 0,5N. On porte sous agitation à 100°C pendant six heures. On arrête le chauffage et on rajoute 3,5 g d'acide chlorhydrique à 10%. On obtient 0,758 kg de résine notée I. Cette résine est caractérisée par R.M.N $^{29}$ Si et on obtient la distribution des motifs suivante.

| | | |
|---|---|---|
| $D^0(OR^{12})$ | 3,2% | |

(suite)

| | | |
|---|---|---|
| $D^1(OR^{12})$ | 14,8% | |
| $D^2$ | 15,3% | |
| $T^0(OR^{12})+T^0Z(OR^{12})$ | 1,1% | viscosité 48 mPa.s |
| $T^1(OR^{12})_2+T^1Z(OR^{12})$ | 12,6% | |
| $T^2(OR^{12})+T^2Z(OR^{12})$ | 30,7% | |
| $T^3 + T^3Z$ | 22,2% | |
| MeOSi/Si | 0,8 mol/mol | |

**Phase 3 : Salification**

Dans un ballon tricol de capacité 1000 ml on ajoute 364 g de résine aminée de la **phase 2** décrite précédemment. Sous agitation on coule en 1 heure, sous agitation et sous air un mélange contenant 57,6 g d'acide acétique pur et 105 g d'éthanol. La température de la masse liquide atteint 30°C en fin de coulée. On chauffe ensuite le mélange réactionnel 3 heures à 90°C. On revient ensuite à température ambiante. La nouvelle résine obtenue est dispersable dans l'eau.

**L'analyse par R.M.N du silicium a été effectuée pour caractériser la résine :**

| | |
|---|---|
| $D^0(OR^{12})$ | 1% |
| $D^1(OR^{12})$ | 12,3% |
| $D^2$ | 19,1% |
| $T^0(OR^{12})+T^0Z(OR^{12})$ | 0,4% |
| $T^1(OR^{12})+T^1Z(OR^{12})$ | 9,5% |
| $T^2(OR^{12})+T^2Z(OR^{12})$ | 31,3% |
| $T^3 + T^3Z$ | 26,4% |
| MeOSi/Si | 0,51 mol/mol |

**Phase 4 : Réticulation**

On étudie la réticulation de ces résines $DT(OR^{12})$ TZ avec différents catalyseurs et à l'aide d'un pendule à fibres avec différentes durées de préhydrolyse à 20°C des échantillons dans une atmosphère à 100% d'humidité relative.

Les modules obtenus sont exprimés en $Hz^2$

| | | | |
|---|---|---|---|
| Essai 12.1 | + 2% d'oc. de fer à 6% en fer | | : 0.32 |
| Essai 12.2 | + 2% d'oc. de fer à 6% en fer | + 4 heures d'hydrolyse | : 0.42 |
| Essai 12.3 | + 2% d'oc. de fer à 6% en fer | + 17 heures d'hydrolyse | : 0.50 |
| Essai 12.4 | + 6% carb de Li à 2% en Li | + 4 heures d'hydrolyse | : 0.6 |
| Essai 12.5 | + 2% d'oc. de fer à 6% en fer sans hydrolyse | | : 0.56 |
| Essai 12.6 | + 6% carb de Li à 2% en Li | + 4 heures d'hydrolyse | : 0.65 |

Les essais 12.1 à 12.4 ont été réalisés avec des résines DT(OR12)TZ non salifiées et les essais 12.5 et 12.6 avec ces résines salifiées.

**Revendications**

1. Procédé de condensation entre au moins un motif (SiOH) et au moins un motif (SiR) avec R = H ou OR*, avec R* = hydrogène ou radical hydrocarboné monovalent ayant de 1 à 12 atomes de carbone, lesdits motifs SiOH/SiR appartenant à au moins un composé organosilicié, en présence d'une quantité efficace d'un catalyseur organométallique,

   caractérisé en ce que l'on sélectionne le catalyseur parmi les produits de formule suivante :

- *1* - $(R^1 COO)_v M$

dans laquelle M = métal alcalin ou alcalino-terreux, v = valence de M et $R^1$ est un radical hydrocarboné, avec la condition selon laquelle ce radical hydrocarboné possède au moins un carbone quaternaire et/ou au moins deux carbones tertiaires et comprend, de préférence, au moins trois atomes de carbone, cette condition s'appliquant dans le cas où le (ou les) composé(s) organosilicié(s) mis en oeuvre n'est (ne sont) pas aminé(s) et/ou salifié(s),

- ou leurs mélanges.

**2.** Procédé selon la revendication 1, caractérisé en ce que le catalyseur de formule - *1* - est associé à au moins un cocatalyseur choisi parmi les produits de formules suivantes :

- *2* - $R^{1*} COOH$

avec $R^{1*}$ correspondant à un groupement $R^1$ tel que défini dans la revendication 1,

- *3* - $(R^2O)_v M$,

- *4* - $(R^2COCR^3R^4COR^5)_v M$

M et v étant tels que définis supra

et $R^2$, $R^3$, $R^4$, $R^5$ sont identiques ou différents et représentent l'hydrogène, un alkyle linéaire ou branché et/ou cyclique en $C_1$-$C_{12}$ éventuellement insaturé, un aryle, un aralkyle, un arylalkyle, un organosilicié (de préférence du type silanolate ou siloxanate), lesdits radicaux hydrocarbonés étant éventuellement substitués et avantageusement (per)halogénés,

- *5* -

ou leurs mélanges.

**3.** Procédé selon la revendication 1 ou 2, caractérisé en ce que le métal M des formules 1, 3 et 4 appartient au groupe suivant : Li, Na, K, le Li étant préféré,

et le néodécanoate de lithium et/ou le triméthyl-3,5,5-hexanoate de lithium étant particulièrement préférés dans le cas où le (ou les) composé(s) organosilicié(s) mis en oeuvre n'est (ne sont) pas aminé(s) et/ou salifié(s).

**4.** Procédé selon l'une quelconque des revendications 1 à 3, caractérisé en ce que le composé silicié impliqué dans la condensation est avantageusement, un polyorganosiloxane **A** (POS) dont au moins une des extrémités silicium comprend au moins un hydroxyle ou un radical hydrolysable ou condensable.

ledit POS répondant de préférence à la formule **($A_1$)** suivante :

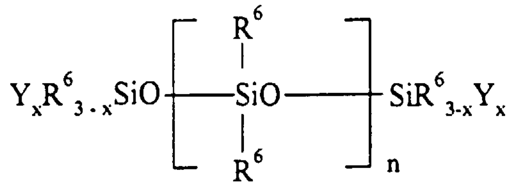

($A_1$)

avec

- x = 0,1,2 ou 3
- n entier supérieur ou égal à 1 de préférence à 10,
- les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

les radicaux méthyle, éthyle, propyle, butyle étant plus particulièrement sélectionnés,

- Y représentant des groupes identiques ou différents et hydrolysables ou condensables ou bien encore hydroxyles ;
- au moins une partie des radicaux $R^6$ pouvant éventuellement correspondre à Y.

**5.** Procédé selon la revendication 4, caractérisé en ce que le composé silicié **A** est associé à un autre composé silicié

**B** constitué de préférence par un silane de formule générale :

(B) $R^{7}_{4-a}\,Si\,Y'_{a}$

dans laquelle :

- $R^7$ a les significations données plus haut à la formule $\mathbf{A_1}$
- Y' représente des groupes hydrolysables ou condensables, identiques ou différents,
- et a est égal à 3 ou 4,

**6.** Procédé de condensation entre :

→ au moins un polyorganosiloxane **A** (POS) dont au moins une des extrémités silicium comprend au moins un hydroxyle ou un radical hydrolysable ou condensable,
ledit POS répondant de préférence à la Formule $(\mathbf{A_1})$ suivante :

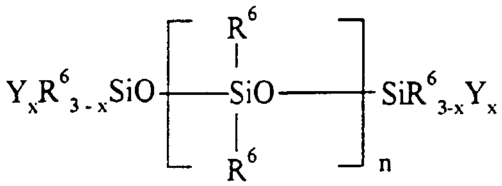

$(A_1)$

avec

- ♦ x = 0, 1, 2 ou 3
- ♦ n entier supérieur ou égal à 1 de préférence à 10,
- ♦ les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

  les radicaux méthyle, éthyle, propyle, butyle étant plus particulièrement sélectionnés,

- ♦ Y représentant des groupes identiques ou différents et hydrolysables ou condensables ou bien encore hydroxyles ;
- ♦ au moins une partie des radicaux $R^6$ pouvant éventuellement correspondre à Y,

→ et au moins un silane **B** de formule générale :

**(B)** $R^{7}_{4-a}\,Si\,Y'_{a}$

dans laquelle :

- . $R^7$ a les significations données plus haut à la formule $\mathbf{A_1}$
- Y' représente des groupes hydrolysables ou condensables, identiques ou différents,
- et a est égal à 3 ou 4 ;

→ en présence d'une quantité efficace d'un catalyseur organométallique,
caractérisé

- en ce que l'on sélectionne le polyorganosiloxane **A** parmi ceux dans lesquels le ratio molaire $R^6$ / Si est supérieur ou égal à 2,
- et en ce que le catalyseur est constitué par au moins un produit de formule $R^{\gamma}COOLi$, dans laquelle $R^{\gamma}$ répond à la même définition que celle donnée dans la revendication 1 ci-dessus pour $R^{\alpha}$ et $R^{\beta}$, $R^{\gamma}$ étant, de préférence, un alkyle en $C_1$-$C_{30}$, avantageusement en $C_1$-$C_{18}$, linéaire ou ramifié ($R^{\gamma}$ n'étant pas limité à $R^{\alpha}$ dans ce dernier cas), un aryle, un aralkyle ou un alkylaryle, le méthyle et l'éthyl-2-pentyle étant particulièrement préférés.

**7.** Procédé selon l'une quelconque des revendications 1 à 6, caractérisé en ce que le composé silicié impliqué dans la condensation, est constitué par une résine **C** polyorgano(alcoxy)siloxane (POS), répondant à la formule ci-

après :

$$(C)\qquad [R^9{}_3SiO_{\frac{1-t0}{2}}(OR^{12})_{t0}]_q\,[R^{10}{}_2SiO_{\frac{2-t1}{2}}(OR^{12})_{t1}]_u\,[R^{11}SiO_{\frac{3-t2}{2}}(OR^{12})_{t2}]_y$$

$$[ZR^{10}Si_{\frac{2-t3}{2}}(OR^{12})_{t3}]_{z'}[ZSiO_{\frac{3-t4}{2}}(OR^{12})_{t4}]_{z''}\,[SiO_{\frac{4-t5}{2}}(OR^{12})_{t5}]_w$$

dans laquelle :

- $q+u+y+z'+z''+w = 1$
- $0 \le q < 1$ ; $0 \le u < 1$ ; $0 \le y < 1$ ; $0 \le z' \le 1$ ; $0 \le z'' < 1$ ; $0 \le w < 1$
- $t_0 \le 1$ ; $t_1 \le 2$ ; $t_3 \le 2$ ; $t_4 \le 3$ ; $t_5 \le 4$.
- $R^9$, $R^{10}$ et $R^{11}$ sont identiques ou différents et représentent des radicaux :

  . (cyclo)alKYle,(cyclo)alcényle, (cyclo)alcynyle,
  . aryle, avantageusement phényle, aralkyle, alkylaryle,

lesdits radicaux étant éventuellement substitués, de préférence, halogénés et éventuellement perhalogénés ;

- $R^{12}$ a la même définition que $R^9$, $R^{10}$, $R^{11}$ telle qu'énoncée ci-dessus et peut correspondre en outre à des groupements hydrocarbonés en $C_1$-$C_{20}$ comprenant éventuellement un ou plusieurs hétéroatomes, et en particulier comportant des motifs oxime, énoxy éther ou polyéther,
- Z est identique ou différent d'une unité récurrente DZ ou TZ à l'autre et représente un groupement monovalent hydrocarboné, lié au silicium par une liaison Si-C et contenant au moins un atome d'azote, de préférence Z répond à la formule suivante :

$$-R^{13}-N(R^{14})_2$$

dans laquelle :

- $R^{13}$ est un groupement alkylène divalent en $C_1$-$C_{10}$, éventuellement substitué,
- les groupements $R^{14}$ sont identiques ou différents et

  * soit représentent l'hydrogène ou $-R^{15}-NH_2$ avec $R^{15}$ ayant la même signification que $R^{13}$,
  * soit sont différents de l'hydrogène et forment ensemble un cycle de 5-7 chainons renfermant au moins un hétéroatome, de préférence l'azote ou l'oxygène.

**8.** Procédé selon la revendication 7, caractérisé en ce que le radical Z de la formule **(C)** est exempt de groupements $R^{14}$ cyclisés et correspond à :
_(alkylène __NH__)$_s$ alkylène __NH$_2$ avec s = 0 à 3.

**9.** Procédé selon la revendication 7, caractérisé en ce que Z est cyclisé et représente :

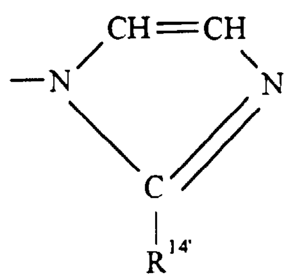

ou

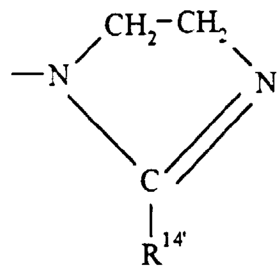

avec $R^{14'}$ = H ou alkyle, de préférence en $C_1$-$C_{10}$.

**10.** Procédé selon l'une quelconque des revendications 7 à 9, caractérisé en ce que la résine siliciée et aminée **(C)**, est salifiée et comprend un ou des radicaux Z de formule suivante :

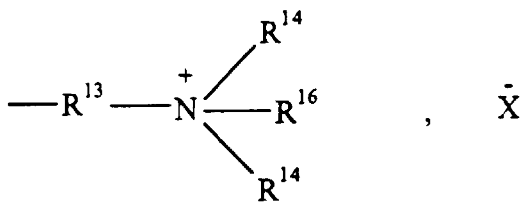

avec $R^{13}$ et $R^{14}$ tels que définis supra, $R^{16}$ ayant la même signification que $R^{14}$
et X représentant un contre-anion choisi parmi les carboxylates, les halogénures, les sulfonates, de préférence parmi les produits suivants : lactate, acétate, chlorure,
et en ce que le (ou les) reste(s) $R^1$ de (ou des) catalyseur(s) de formule (1) mis en oeuvre est (sont) de nature hydrocarboné comprenant ou non au moins un carbone quaternaire et/ou au moins deux carbones tertiaires, de préférence, choisi parmi les alkyles, et plus préférentiellement encore parmi les radicaux suivants substitués ou non : acétates, propropionates, butanoates, pentanoates, hexanoates (éthyl-2-hexanoate) heptanoates, octanoates.

**11.** Procédé selon l'une quelconque des revendications 1 à 10, caractérisé en ce que la réaction de condensation/réticulation et/ou fonctionnalisation) est mise en oeuvre entre au moins un composé de type **A** et/ou **B** et/ou **C**.

**12.** Catalyseur de condensation susceptible d'être mis en oeuvre lors de la réaction entre au moins un motif(SiOH) et au moins un motif (SiR) avec R = H ou OR*, avec R* = hydrogène ou radical hydrocarboné monovalent ayant de 1 à 12 atomes de carbone, lesdits motifs SiOH/SiR appartenant à au moins un composé (organo)silicié, en présence d'une quantité efficace d'un catalyseur organométallique,
caractérisé en ce qu'il est choisi parmi les produits de formule suivante :

$$- 1 - (R^1\ COO)_v\ M$$

dans laquelle M = métal alcalin ou alcalino-terreux, v = valence de M et $R^1$ est un radical hydrocarboné, avec la condition selon laquelle ce radical hydrocarboné possède au moins un carbone quaternaire et/ou au moins deux carbones tertiaires et comprend, de préférence, au moins trois atomes de carbone, cette condition s'appliquant dans le cas où le (ou les) composé(s) organosilicié(s) mis en oeuvre n'est (ne sont) pas aminé(s) et/ou salifié(s),

- ou leurs mélanges.

**13.** Catalyseur selon la revendication 12 caractérisé en ce qu'il est associé à au moins un cocatalyseur choisi parmi les produits de formules suivantes :

$$- 2 - R^{1*}\ COOH$$

avec $R^{1*}$ correspondant à un groupement $R^1$ tel que défini dans la revendication 1,

$$- 3 - (R^2O)_v\ M,$$

$$- 4 - (R^2COCR^3R^4COR^5)_v\ M$$

M et v étant tels que définis supra
et $R^2$, $R^3$, $R^4$, $R^5$ sont identiques ou différents et représentent l'hydrogène, un alkyle linéaire ou branché et/

ou cyclique en $C_1$-$C_{12}$ éventuellement insaturé, un aryle, un aralkyle, un arylalkyle, un organosilicié (de préférence du type silanolate ou siloxanate), lesdits radicaux hydrocarbonés étant éventuellement substitués et avantageusement (per)halogénés,

- *5* -

ou leurs mélanges.

**14.** Catalyseur selon la revendication 12 ou 13, caractérisé en ce que le métal M des formules - *1* -, - *3* - et - *4* - appartient au groupe suivant : Li, Na, K, le Li étant préféré,

et le néodécanoate de Lithium ou le triméthyl-3,5,5-hexanoate de lithium étant particulièrement préférés dans le cas le (ou les) composé(s) organosilicié(s) mis en oeuvre n'est (ne sont) pas aminé(s) et/ou salifié(s).

**15.** Catalyseur de condensation, susceptible d'être mis en oeuvre lors de la réaction entre :

→ au moins un polyorganosiloxane **A** (POS) dont au moins une des extrémités silicium comprend au moins un hydroxyle ou un radical hydrolysable ou condensable; ledit POS répondant de préférence à la Formule (**A$_1$**) suivante

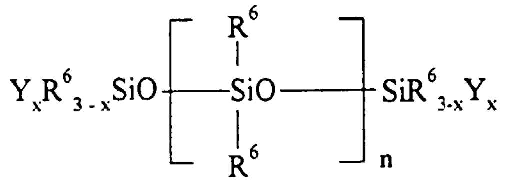

($A_1$)

avec

- x = 0, 1, 2 ou 3
- n entier supérieur ou égal à 1 de préférence à 10,
- les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkcylaryle, et éventuellement substitué, avantageusement par un ou plusieurs halogènes,

les radicaux méthyle, éthyle, propyle, butyle étant plus particulièrement sélectionnés,

- Y représentant des groupes identiques ou différents et hydrolysables ou condensables ou bien encore hydroxyles ;
- au moins une partie des radicaux $R^6$ pouvant éventuellement correspondre à Y,
  ledit POS **A** présentant un ratio molaire $R^6/Si \geq 2$ ;

→ et au moins un silane **B** de formule générale :

**(B)** $R^7_{4-a}\,Si\,Y'_a$

dans laquelle :

- $R^7$ a les significations données plus haut à la formule **A$_1$**
- Y' représente des groupes hydrolysables ou condensables, identiques ou différents,
- et a est égal à 3 ou 4 ;

caractérisé en ce qu'il est constitué par au moins un produit de formule $R^\gamma COOLi$, dans laquelle $R^\gamma$ répond à la même définition que celle donnée dans la revendication 1 ci-dessus pour $R^\alpha$ et $R^\beta$, $R^\gamma$ étant, de préférence, un alkyle en $C_1$-$C_{30}$, avantageusement en $C_1$-$C_{18}$, linéaire ou ramifié ($R^\gamma$ n'étant pas limité à $R^\alpha$ dans ce dernier cas), un aryle, un aralkyle ou alkylaryle, le méthyle et l'éthyl-2-pentyle étant particulièrement préférés.

**16.** Composition silicone réticulable, éventuellement en présence d'eau, caractérisée en ce qu'elle comprend au moins un composé silicié **A** fonctionnalisé par condensation à l'aide d'au moins un silane **B**.

**17.** Composition silicone réticulable, éventuellement en présence d'eau, caractérisée en ce qu'elle comprend

- au moins un composé silicié **A** fonctionnalisé ou non, tel que défini notamment dans les revendications 1 ou 4,
- et au moins composé silicié **B** et/ou au moins un composé silicié **C** tels que définis notamment et respectivement, dans les revendications 5, d'une part, et 6 à 9 d'autre part,
- ainsi qu'au moins un catalyseur de formule - *1* - éventuellement associé à un ou plusieurs ou cocatalyseurs de formule - *2* - et/ou - *3* - et/ou - *4* - tels que définis notamment dans les revendications 1 à 3, 12 à 14.

**18.** Composition silicone réticulable en présence d'eau pour former une résine, caractérisée en ce qu'elle comprend :

- au moins une résine durcissable formée par un composé silicié **C** tel que défini notamment dans les revendications 7 à 10,
- et au moins un catalyseur de condensation de formule - *1* - éventuellement associé à un ou plusieurs cocatalyseurs de formule - *2* - et/ou - *3* - et/ou - *4* - tels que définis notamment dans les revendications 1 à 3 et 12 à 14.

**19.** Composition silicone réticulable, éventuellement en présence d'eau, caractérisée en ce qu'elle comprend :

→ au moins un POS **A**, dont au moins une des extrémités silicium comprend au moins un hydroxyle ou un radical hydrolysable ou condensable;
ledit POS répondant de préférence à la Formule **($A_1$)** suivante :

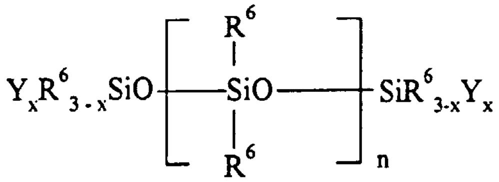

($A_1$)

avec

- x = 0, 1, 2 ou 3
- n entier supérieur ou égal à 1 de préférence à 10,
- les radicaux $R^6$ étant identiques ou différents entre eux et correspondant à l'hydrogène ou à des groupements hydrocarbonés en $C_1$-$C_{12}$, de préférence (cyclo)alkyle, (cyclo)alcényle, (cyclo)alcynyle linéaire ou branché, aryle, aralkyle, alkylaryle, et éventuellement substitué, avantageusement par un ou plusieurs halogènes,

les radicaux méthyle, éthyle, propyle, butyle étant plus particulièrement sélectionnés.

- Y représentant des groupes identiques ou différents et hydrolysables ou condensables ou bien encore hydroxyles ;
- au moins une partie des radicaux $R^6$ pouvant éventuellement correspondre à Y,
ledit POS **A** présentant un ratio molaire $R^6/Si \geq 2$ ;

→ au moins un silane **B** de formule générale :

**(B)** $R^7_{4-a}\,Si\,Y'_a$

dans laquelle :

- $R^7$ a les significations données plus haut à la formule **$A_1$**
- Y' représente des groupes hydrolysables ou condensables, identiques ou différents,
- et a est égal à 3 ou 4 ;

→ et au moins un catalyseur organométallique constitué par au moins un produit de formule $R^\gamma COOLi$, dans laquelle $R^\gamma$ répond à la même définition que celle donnée dans la revendication 1 ci-dessus pour $R^\alpha$ et $R^\beta$, $R^\gamma$ étant, de préférence, un alkyle en $C_1$-$C_{30}$, avantageusement en $C_1$-$C_{18}$, linéaire ou ramifié ($R^\gamma$ n'étant pas limité à $R^\alpha$ dans ce dernier cas), un aryle, un aralkyle ou un alkylaryle, le méthyle et l'éthyl-2-pentyle étant particulièrement préférés.

**20.** Système d'élastomères silicones réticulables comprenant au moins deux composants (I) et (II) susceptibles d'être mis en présence pour réticuler et former un matériau dur, le composant (I) comportant au moins un composé silicié

**A** tel que défini dans les revendications 1 ou 4 tandis que l'autre composant (II) contient au moins un composé silicié **B** et/ou **C**,

l'un et/ou l'autre des composés (I) et (II) comportant en outre, d'une part, au moins un catalyseur de formule - *1* - éventuellement associé à un ou plusieurs cocatalyseurs de formule - *2* - et/ou - *3* - et/ou - *4* - tel que défini dans les revendications 1 à 3 et 12 à 14, et d'autre part, de l'eau.

**21.** Application de la composition selon la revendication 15, 16, 17, 18 ou 19 ou du système selon la revendication 20 :

- pour la réalisation de revêtements, notamment antiadhérent, de supports solides, de nature variée, avantageusement en pierre, béton, métal, bois, verre, céramique, papier, carton;
- pour l'enduction de matériau fibreux tissés ou non,
- à titre de liant, notamment hydrofuge, pour matériaux composites fibreux ou non, lesdites éventuelles fibres étant minérales ou non.
- ou à titre de mastic ou de matériau d'étanchéification.

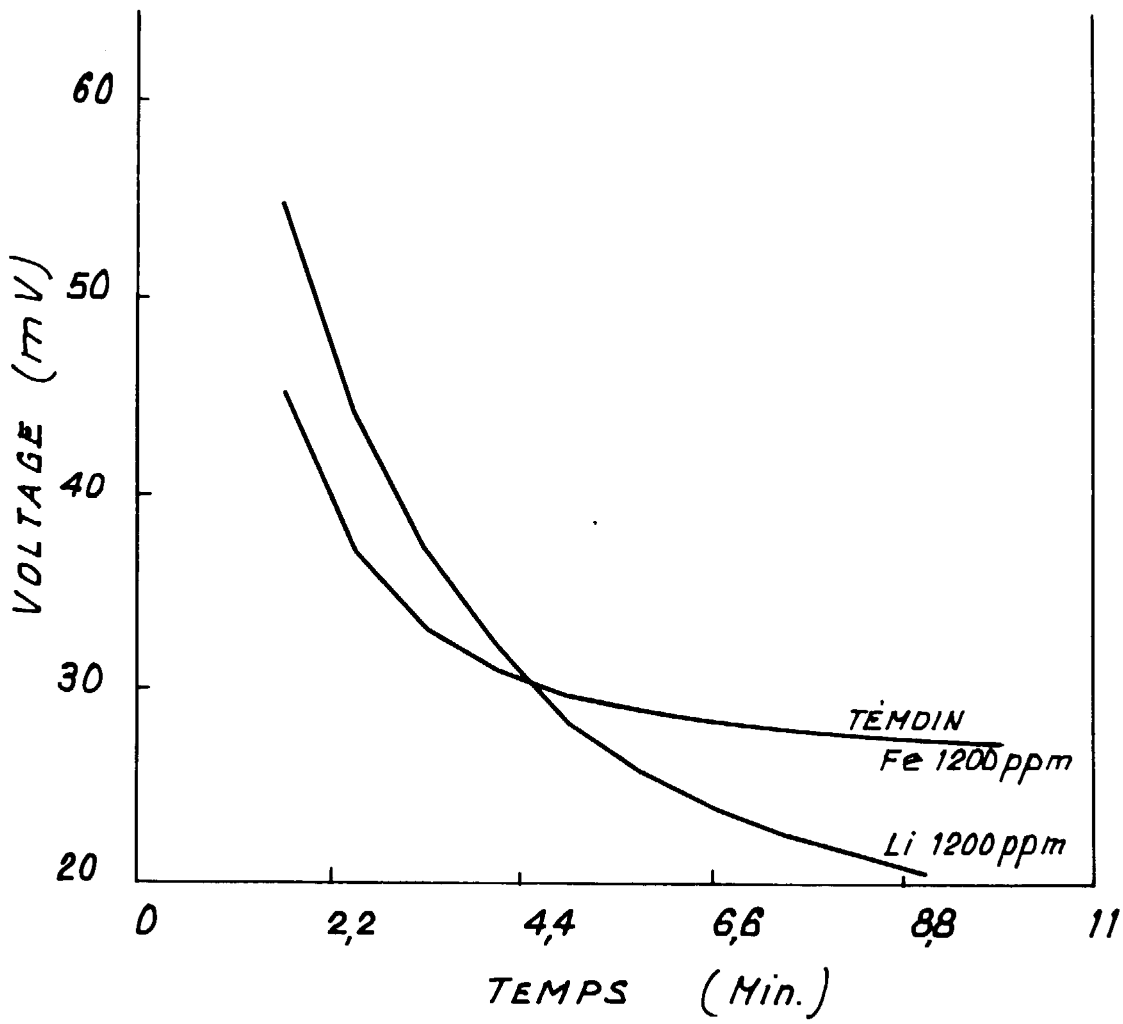
60
50
40
30
20
VOLTAGE (mV)
0
2,2
4,4
6,6
8,8
11
TEMPS (Min.)
TEMOIN
Fe 1200 ppm
Li 1200 ppm

Office européen des brevets

# RAPPORT DE RECHERCHE EUROPEENNE

Numero de la demande
EP 96 42 0019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | EP-A-0 564 253 (LOCTITE)<br>* revendication 9 * | 1 | C08G77/08<br>C08K5/098<br>C08K5/00 |
| A | EP-A-0 119 092 (DOW CORNING)<br>* revendication 1 * | 1 | |
| A | DE-A-32 38 039 (KANSAI PAINT)<br>* page 12 - page 14 * | 1 | |
| A,D | US-A-5 026 811 (KOOKOOTSEDES)<br>* colonne 3, ligne 40 - colonne 4, ligne 17 * | 1 | |

DOMAINES TECHNIQUES RECHERCHES (Int.Cl.6)
C08G
C08K

Le présent rapport a été établi pour toutes les revendications

| Lieu de la recherche | Date d'achèvement de la recherche | Examinateur |
|---|---|---|
| LA HAYE | 15 Mai 1996 | Lentz, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)